# FASCICULE DE BREVET EUROPEEN

(11) **EP 0 424 267 B1**
(45) Date de publication et mention de la délivrance du brevet: **04.08.1993**
(21) Numéro de dépôt: 90402937.8
(22) Date de dépôt: 18.10.1990
(51) Int. Cl.: B64C 27/51

(54) **Dispositif visco-élastique rotatif de rappel élastique et d'amortissement en traînée pour pale de rotor de giravion, et tête de rotor le comportant**
Visko-elastische Drehvorrichtung für die Blattrückholung und schwenkdämpfung eines Drehflügelflugzeugblattes, und Rotorkopf
Rotary visco-elastic return and lag-damping device for a rotorcraft blade, and rotor head

(30) Priorité: 20.10.1989 FR 8913799
(43) Date de publication de la demande: 24.04.1991
(73) Titulaire: AEROSPATIALE Société Nationale Industrielle, 75781 Paris Cédex 16 (FR)
(72) Inventeur: Bietenhader, Claude, F-13410 Lambesc (FR); Suzzi, Robert, Jean, F-13005 Marseille (FR)
(74) Mandataire: Phélip, Bruno

(56) Documents cités:
- FR-A- 1 516 754
- GB-A- 643 875
- US-A- 2 516 781
- US-A- 4 494 738

## Description

La présente invention concerne les dispositifs d'amortissement et de rappel élastique en traînée, pour les pales de rotors de giravions, et l'invention se rapporte plus précisément à un tel dispositif comprenant un organe de rappel élastique avec amortissement incorporé, du type rotatif et dont le fonctionnement est assuré par cisaillement circonférentiel d'un matériau visco-élastique à grande rémanence aux déformations, tel qu'un élastomère.

On connaît déjà de nombreuses réalisations d'organes de rappel élastique avec amortissement incorporé de pales de rotor en traînée, par cisaillement d'un matériau visco-élastique de ce type, qui sont souvent appelés contre-fiches de rappel élastique avec amortissement incorporé, ou amortisseurs de traînée, ou encore adaptateurs de fréquence en traînée, pour les pales des rotors de giravions, et en particulier d'hélicoptères, et qui sont montés de sorte que les mouvements angulaires des pales dans leur plan de traînée soient transmis à ces organes, dont le matériau visco-élastique est sollicité en cisaillement et assure un amortissement de ces mouvements angulaires des pales en exerçant un rappel élastique de ces pales vers une position initiale, qui est une position neutre des pales en traînée.

Le brevet français 2 063 969 de la demanderesse décrit plusieurs exemples de dispositif de liaison élastique amortie entre pale et moyeu sur rotor de giravion, ce dispositif comportant des moyens de solidarisation du pied de pale au moyeu qui conjuguent un élément élastique et un élément amortisseur. Indépendamment d'exemples hydro-mécaniques combinant les effets d'un ressort mécanique, tel qu'un ressort métallique hélicoïdal ou un empilage de rondelles métalliques coniques, à ceux d'un amortisseur hydraulique, à piston monté coulissant dans un cylindre rempli de fluide hydraulique, ce document décrit en référence aux figures 7 à 9 des dispositifs réalisant le rappel élastique des pales en traînée et l'amortissement des oscillations angulaires de traînée des pales par cisaillement d'un matériau élastomère ayant des propriétés particulières et combinées de faible élasticité et de grande rémanence aux déformations. Dans la forme de réalisation de l'organe élastique et amortisseur représentée sur les figures 7 et 8, cet organe est constitué de plaques rectangulaires, allongées et parallèles d'élastomère qui sont disposées, de façon alternée, entre des plaques métalliques rigides, également rectangulaires, parallèles et allongées, auxquelles elles sont adhérisées, les plaques métalliques étant alternativement reliées, pour les unes, au pied d'une pale, et pour les autres, à une attache sur le moyeu afin que ces plaques métalliques subissent, suivant les oscillations de traînée de la pale correspondante, un mouvement relatif dans leur sens longitudinal, qui sollicite en cisaillement les plaques d'élastomère dans le sens longitudinal pour assurer l'amortissement dynamique et exercer le retour élastique vers la position neutre initiale. En variante, il est également proposé dans ce document de remplacer les plaques allongées rigides par des éléments tubulaires coaxiaux entre lesquels de la matière visco-élastique est vulcanisée, l'organe ainsi obtenu constituant toujours un dispositif coulissant à faible débattement axial. Dans la forme de réalisation de l'organe élastique et amortisseur représentée sur la figure 9, cet organe est constitué de deux empilages coaxiaux comprenant chacun des couches de matière visco-élastique, réalisées sous la forme de galettes d'élastomère, qui sont interposées entre des plaques métalliques circulaires superposées ou disques métalliques superposés et coaxiaux, dont les deux plaques ou disques métalliques aux extrémités axiales de chaque empilage sont sollicités par des mouvements relatifs de rotation autour de leur axe commun. Pour cela, un disque métallique circulaire d'extrémité de l'empilage est retenu sur une chape d'attache au moyeu, dans laquelle est monté un axe de retenue du pied de pale, tandis que le disque métallique circulaire de l'autre extrémité de l'empilage est claveté ou cannelé sur l'axe de retenue, lui-même solidaire en rotation du pied de la pâle dans la chape d'attache au moyeu. Ainsi, les débattements angulaires en traînée de la pale par rapport à la chape de retenue sont amortis avec un rappel élastique vers une position neutre en traînée, par cisaillement des galettes plates et minces de matériau visco-élastique en rotation circonférentielle dans leur plan.

Il convient de remarquer que ces dispositifs de rappel élastique et d'amortissement sont, dans ce document, directement associés, sur la tête de rotor, à une seule et unique attache de pale sur le moyeu dotée d'un degré de liberté restreint en rotation dans le plan de traînée de la pale, ce qui ne correspond pas à l'architecture des rotors articulés équipant les hélicoptères modernes actuellement en service et en développement.

Les têtes de tels rotors articulés modernes sont décrites notamment dans les brevets français 2 427 251, 2 456 034, 2 584 995 et 2 584 996 de la demanderesse.

Dans le brevet français 2 427 251, le rotor comporte un moyeu rigide, métallique ou de structure composite, d'une seule pièce avec le mât rotor ou fixé au sommet de ce dernier, par exemple par boulonnage, et auquel le pied de chaque pale est accouplé par l'intermédiaire d'une butée sphérique lamifiée, qui autorise ses débattements angulaires en pas, en battement et en traînée, et d'une contre-fiche de rappel élastique en traînée, comportant des éléments amortisseurs en élastomère travaillant au cisaillement. La partie périphérique du moyeu, en forme de plateau ou d'anneau radial plat, de pourtour polygonal convexe ou sensiblement circulaire, est traversée dans la direction de l'axe du rotor par autant d'alvéoles qu'il y a de pales, chaque butée sphérique lamifiée étant montée entre le bord extérieur de l'un des alvéoles et les extrémités des branches radiales internes d'une partie d'attache fourchue, solidaire du pied de la pale correspondante, chaque contre-fiche de rappel en traînée étant constituée par un empilement alterné de plaques métalliques et de plaques d'un matériau visco-élastique à grande rémanence aux déformations, et ayant ses extrémités accouplées respectivement par l'intermédiaire de rotules, l'une directement au pied de l'une des pales ou sur la partie d'attache fourchue correspondante, et l'autre extrémité, à un point du pourtour du moyeu qui est situé entre les butées sphériques lamifiées associées respectivement à la pale considérée et à la pale immédiatement précédente dans le sens de rotation du rotor. De plus, selon un montage avantageux, la rotule articulant sur le moyeu une extrémité de la contre-fiche lamifiée et allongée fonctionnant en amortisseur linéaire et en organe de rappel élastique linéaire, a son centre situé sur la bissectrice des axes longitudinaux de changement de pas de la pale considérée et de la pale voisine immédiatement précédente dans le sens de rotation du rotor, lorsque ces deux pales occupent leur position neutre en traînée, le centre de cette rotule étant simultanément voisin de l'axe de battement de la pale considérée, passant par le centre de la butée sphérique lamifiée correspondante.

Dans le brevet français 2 456 034, qui est une addition au brevet français mentionné en dernier lieu ci-dessus, le moyeu rigide comporte un fût central, prolongeant le mât du rotor, et portant un plateau radial supérieur et un plateau radial inférieur, et le support radial externe de chaque butée sphérique lamifiée de retenue et d'articulation d'une pale sur le moyeu est encastré entre les bords radiaux des deux plateaux et fixé directement à ces bords, à la façon d'une entretoise rigide, tandis que le pied de chaque pale est réuni à l'autre support rigide, ou support radial interne, de la butée lamifiée sphérique correspondante par une chape, disposée radialement, et dont les deux branches radiales espacées l'une de l'autre dans la direction de l'axe du rotor sont évidées pour le libre passage du support radial externe de la butée sphérique lamifiée, partiellement logée entre les branches de cette chape radiale et entre les deux plateaux radiaux du moyeu. Chaque contre-fiche de rappel en traînée, également réalisée dans ce document sous la forme d'un empilement alterné de plaques allongées rigides et de couches d'un matériau visco-élastique, est accouplée par ses deux extrémités en direction longitudinale, et par l'intermédiaire de rotules, d'une part sur la chape associée à la pale correspondantes et, d'autre part, en un point du fût central du moyeu. Dans ce cas également, les plaques de matériau visco-élastique sont sollicitées en cisaillement longitudinal entre les plaques rigides allongées de la contre-fiche, reliées alternativement au pied de pale et au moyeu, de sorte que l'amortissement et le rappel élastique exercés sont linéaires.

Dans les brevets français 2 584 995 et 2 584 996, le mât rotor et le moyeu sont réalisés sous la forme d'un mât-moyeu tubulaire intégré, d'une seule pièce, qui présente, pour chaque pale du rotor, une ou deux ouvertures latérales traversées respectivement par l'une des deux branches radiales internes ou par ces deux branches d'une pièce d'attache fourchue de la pale au moyeu, les extrémités radiales internes des deux branches étant rigidement liées au support radial interne de la butée lamifiée sphérique correspondante, qui est au moins partiellement logée à l'intérieur du mât moyeu tubulaire intégré, de sorte que son support radial externe soit fixé à la partie périphérique du mât moyeu tubulaire intégré, éventuellement conformée en jante entourée d'une ceinture composite de renfort, et à laquelle l'ouverture pour chaque pale, ou chacune des deux ouvertures pour chaque pale, est adjacente. L'amortissement en traînée et le rappel élastique de chaque pale vers son axe neutre sont assurés par une contre-fiche allongée, à fonctionnement linéaire, constituée d'un empilement alterné de plaques rigides et de plaques d'un matériau visco-élastique, ou de tubes coaxiaux et rigides entre lesquels est incorporé un manchon cylindrique en matériau visco-élastique vulcanisé aux deux tubes. Chaque contre-fiche de rappel élastique à amortissement incorporé, dont la structure est allongée dans le plan de rotation de la pale correspondante, est accouplée par l'une de ses extrémités longitudinales, à l'aide d'une rotule, sur le pied de pale correspondant ou sur la pièce d' attache fourchue conformée en un manchon de liaison du pied de pale au moyeu, et, par son autre extrémité longitudinale, et également par une rotule, sur le mât moyeu tubulaire intégré. Chaque contre-fiche est ainsi actionnée axialement, car, selon les mouvements angulaires de la pale en traînée, elle se raccourcit ou s'allonge axialement, de sorte que le matériau visco-élastique qu'elle contient est sollicité en cisaillement axial.

On connaît également, par le brevet US-4,645,423, un dispositif à bielles de traction-compression pour l'amortissement des oscillations en traînée des pales de rotor non articulé d'hélicoptère, sur lequel chaque pied de pale est relié au moyeu par au moins un bras radial flexible et torsible, dont l'extrémité radiale interne est rigidement liée au moyeu, alors que son extrémité radiale externe est rigidement liée au pied de pale. Ce dispositif comprend, pour chaque pale, et donc pour chaque bras radial flexible et torsible, au moins une bielle rigide s'étendant radialement, par rapport à l'axe de rotation du rotor, ou longitudinalement, par rapport à la pale correspondante, sur la longueur du bras radial torsible et flexible, en étant décalée latéralement par rapport à ce bras dans le plan de traînée de la pale correspondante. L'extrémité radiale externe de la bielle est reliée à pivotement par une première attache à l'extrémité externe du bras radial, tandis que l'extrémité interne de la bielle est liée à pivotement par une seconde attache à une extrémité externe d'un amortisseur, également décalé latéralement dans le plan de traînée de la pale, par rapport au bras radial correspondant, et tel que l'extrémité interne de cet amortisseur est liée rigidement au moyeu. Ainsi, la flexion du bras radial dans le plan de traînée de la pale provoque une translation radiale de la bielle, et entraine une réaction de l'amortisseur, monté entre l'extrémité interne de la bielle et le moyeu. Cet amortisseur produit un amortissement du mouvement de translation radiale de la bielle, de façon à permettre un mouvement radial des attaches en réponse à la flexion en traînée du bras radial flexible et torsible. De préférence, il est prévu une bielle du côté du bord d'attaque et une autre bielle du côté du bord de fuite du bras radial correspondant, ces deux bielles s'étendant sensiblement parallèlement à ce bras radial et étant chacune maintenue écartée du bras flexible et torsible par des entretoises rigides, traversées par les bielles avec interposition d'un joint en élastomère faisant fonction d'amortisseur auxiliaire. Chaque amortisseur principal, accouplant une bielle de traction-compression au moyeu, est un amortisseur linéaire radial comprenant deux ensembles de plaques radiales rigides, ayant chacun au moins une plaque radiale, l'un des ensembles étant solidaire du moyeu et l'autre de la pièce articulée par pivotement sur l'extrémité interne de la bielle de traction-compression correspondante. Les plaques des deux ensembles sont disposées en alternance mutuelle et chaque plaque d'un ensemble est reliée à au moins une plaque de l'autre ensemble par une couche rectangulaire, plane d'un matériau élastomère d'amortissement adhérisé d'un côté à un ensemble et de l'autre à l'autre ensemble de plaques, de sorte que les mouvements de translation de la bielle de traction-compression provoquent un cisaillement longitudinal du matériau élastomère, exerçant un amortissement en translation des mouvements de la bielle correspondante.

On sait que les recherches portant sur la réduction de la traînée aérodynamique des nouveaux hélicoptères, en vue d'accroître leurs performances, conduisent à rendre leur tête de rotor la plus compacte possible. Cette compacité entraîne de sévères limitations d'implantation et d'encombrement d'un certain nombre d'organes, dont les organes de rappel élastique avec amortissement incorporé des pales en traînée. Lorsque ces organes sont du type "élastomérique", mettant en oeuvre des couches d'élastomère cisaillées entre deux ou quatre plaques ou manchons métalliques allongés, disposés à l'extérieur du moyeu, entre ce dernier et le pied d'une pale ou un manchon de liaison du pied de pale au moyeu, ces organes offrent alors au vent relatif, d'une part, une surface importante, et, d'autre part, une forme non aérodynamique, qui interviennent défavorablement dans le bilan de traînée de la tête de rotor. Ces inconvénients sont donc présentés par les réalisations décrites dans les brevets français précités.

De plus, dans ces réalisations connues, les rotules d'articulation des extrémités des organes de rappel élastique avec amortissement incorporé sont intégrées à ces organes, de sorte que, lorsque les rotules présentent de l'usure en service, elles doivent être changées en même temps que ces organes. Il en résulte un coût de maintenance et d'entretien élevé.

En outre, dans tous les brevets précités, la disposition des organes de rappel élastique avec amortissement incorporé sensiblement parallèlement aux moyens de liaison du pied de pale au moyeu, ou légèrement incliné sur la direction radiale de ces moyens, a pour inconvénient que ces organes allongés de rappel élastique et d'amortissement ne sont sollicités longitudinalement qu'avec un bras de levier en traînée qui est faible, par rapport au centre d'articulation de la pale en traînée. Il en résulte un rappel élastique en traînée qui est trop faible pour placer le premier mode vibratoire propre de la pale en traînée à une valeur suffisamment éloignée de la vitesse nominale de rotation du rotor et compatible avec le taux d'amortissement apporté par les matériaux visco-élastiques de façon à contrôler les risques d'apparition du phénomène vibratoire dit de "résonance-sol". En d'autres termes, l'adaptation en fréquence permise par les contre-fiches de rappel élastique avec amortissement incorporé de l'état de la technique précité reste relativement défavorable, sauf à augmenter la raideur du rappel élastique, ce qui conduit à des contre-fiches d'une structure plus complexe et d'un encombrement probitif, ce qui est d'autant plus défavorable sur le plan du coût et de la traînée aérodynamique de la tête de rotor.

Enfin, on notera que, dans les brevets français précités, lorsque le plateau radial ou chacun des plateaux radiaux du moyeu, ou lorsque le mât moyeu tubulaire intégré est renforcé par une jante ou sangle de structure composite, qui ceinture le ou chaque plateau, ou le corps de moyeu du mât-moyeu tubulaire intégré, comme la rotule d'articulation de chaque organe de rappel élastique avec amortissement incorporé d'une pale en traînée est retenue sur la périphérie du moyeu, radialement à l'extérieur de la jante ou sangle de renfort, ou dans une position décalée selon l'axe du rotor par rapport à une telle jante ou sangle, les moyens mécaniques de retenue de cette rotule sur le moyeu ne sont pas compatibles avec l'utilisation d'une telle jante ou sangle dans la mesure où ils ne bénéficient pas de sa présence.

Par l'invention, on se propose de remédier à ces inconvénients, et l'invention a pour objet un dispositif d'amortissement et de rappel élastique en traînée pour pale de rotor de giravion, du type comprenant un organe de rappel élastique avec amortissement incorporé par cisaillement d'un matériau visco-élastique à grande rémanence aux déformations, qui se prête à un montage, en particulier sur les têtes de rotor sur lesquelles chaque pale est reliée au moyeu par une partie d'attache fourchue, solidaire en mouvement du pied de la pale, et par des moyens de retenue et d'articulation qui sont au moins partiellement logés dans une cavité du moyeu et entre les branches radiales de la partie d'attache fourchue, et qui comprennent au moins une butée lamifiée élastomérique, et en particulier une butée lamifiée sphérique, retenue entre un support radial externe solidaire du moyeu et un support radial interne solidaire des deux branches radiales de la partie d'attache fourchue, et de sorte que sur une telle tête de rotor le dispositif selon l'invention permette une réduction de la traînée de la tête de rotor, par comparaison avec les dispositifs analogues de l'état de la technique, grâce à une diminution de la surface frontale de l'ensemble des moyens de liaison du pied de pale au moyeu et du dispositif selon l'invention, à un affinement aérodynamique d'ensemble de la tête de rotor et à une meilleure possibilité de caréner cette dernière.

Un autre but de l'invention est de proposer un dispositif du type présenté ci-dessus, dont l'entretien, sur une tête de rotor, est facilité et le coût de maintenance réduit, notamment au niveau des rotules d'articulation sujettes à usure en service.

Un autre but encore de l'invention est de proposer un dispositif du type présenté ci-dessus, et dont le montage sur une tête de rotor permet d'augmenter le bras de levier de sollicitation en traînée, par rapport au centre d'articulation de la pale en traînée, de façon à permettre un accroissement du rappel d'élastique en traînée, et donc de réduire le premier mode vibratoire propre en traînée de la pale à une valeur suffisamment faible par rapport à la vitesse nominale de rotation du rotor pour s'éloigner des risques d'apparition du phénomène vibratoire de résonance-sol.

Encore un autre but de l'invention est de proposer un dispositif du type présenté ci-dessus, dont les moyens mécaniques de liaison au moyeu restent compatibles avec la présence d'une jante ou sangle composite de renfort.

Un dernier but enfin de l'invention est de proposer un dispositif du type précité, qui soit tout à la fois bien adapté pour être monté sur les têtes de rotor comportant, pour chaque pale, une articulation unique de battement, de traînée et de pas, de préférence autour du centre d'une butée élastomérique sphérique, en particulier selon les brevets français 2 427 251, 2 456 034, 2 584 995 et 2 584 996, et d'une structure très simple et peu coûteuse, d'un faible encombrement, facile à mettre en place et à entretenir, et laissant une grande liberté pour le positionnement d'autres organes de la tête de rotor, en particulier l'attache du pied de la pale avec deux axes de retenue dont l'un est amovible, pour permettre le repliage de la pale autour de l'autre, alors utilisé comme charnière de pivotement.

Le document US-2.507.781 décrit une structure d'amortissement du mouvement de traînée d'une pale d'hélicoptère. Cette structure d'amortissement comprend un amortisseur hydro-élastique du type rotatif. L'une des armatures de cet amortisseur est reliée par l'intermédiaire d'un levier et d'une bielle au pied de la pale, l'autre est montée pivotante sur une pièce de liaison reliée à une de ces extrémités par une articulation de battement au moyeu du rotor et à son autre extrémité par une articulation de traînée à la pale. Les liaisons entre l'amortisseur rotatif et la bielle sont des liaisons de pivotement axial. Ce dispositif d'amortisseur est animé nécessairement des mêmes mouvements de pas et de battement que la pale sur laquelle il est articulé. Il ne joue un rôle d'amortissement que dans le cas d'un mouvement de traînée.

On connaît encore par le document US-4.494.638 un dispositif reliant deux éléments en rotation relative autour d'un axe entre lesquels est interposé un élément élastomérique conventionnel.

Il est proposé selon l'invention un dispositif d'amortissement et de rappel élastique en traînée, pour pale de rotor de giravion sur lequel chaque pale du rotor comporte un pied par lequel elle est accouplée à un moyeu entraîné en rotation autour de l'axe du rotor, et retenue audit moyeu par des moyens d'articulation autorisant des mouvements angulaires alternés de pas et de battement de la pale, ainsi que des mouvements angulaires alternés de la pale en traînée dans le plan de rotation des pales du rotor, ledit dispositif étant du type comportant un organe d'amortissement rotatif muni de moyens permettant l'amortissement du pivotement relatif de deux armatures coaxiales dudit organe, l'une de ces armatures étant reliées par au moins une bielle au pied de la pale ou à un élément qui en est solidaire, l'autre de ces armatures étant solidarisée à un support non solidaire du pied de la pale quant à ses mouvements angulaires alternés en traînée, de sorte que les mouvements angulaires en traînée de la pale sont transmis par ladite bielle à l'armature à laquelle elle est reliée, l'amortissement du mouvement relatif des deux armatures assurant l'amortissement des mouvements angulaires en traînée de la pale, caractérisé en ce que l'organe d'amortissement dudit dispositif est un organe de rappel élastique fonctionnant par cisaillement d'un matériau visco-élastique à grande rémanence aux déformations interposé entre lesdites deux armatures rigides, le matériau visco-élastique ayant la forme d'une couronne mince dont les parois internes et externes sont adhérisées respectivement à une surface externe de l'armature interne et une surface interne de l'armature externe, lesdites surfaces interne et externe étant des surfaces sensiblement de révolution coaxiale autour de l'axe dudit organe, l'armature externe présentant un levier en saillie sensiblement radiale vers l'extérieur de l'organe et sur lequel est articulée, par une première rotule la bielle précitée, ladite bielle étant également équipée d'une seconde rotule d'articulation destinée à la rendre solidaire du pied de la pale quant à ses mouvements de traînée, tandis que l'armature interne est destinée à être solidarisée à un support entraîné par le moyeu en rotation autour de l'axe du rotor, ledit support étant non solidaire de la pale quant à ses mouvements de traînée, mais également de pas et de battement, de sorte que les mouvements angulaires en traînée et également en pas et en battement de la pale étant transmis par la bielle au levier et à l'armature externe, qui sont ainsi entraînés en rotation par rapport à l'armature interne autour de l'axe dudit organe, la couronne de matériau viscoélastique est sollicitée en cisaillement en direction circonférentielle et assure un amortissement en rotation des mouvements relatifs des deux armatures en exerçant un rappel élastique en rotation de ces deux armatures vers une position relative initiale correspondant à une position neutre de la pale en traînée.

On comprend que dans un tel dispositif, dont la structure est avantageusement très simple, peu coûteuse, d'un faible encombrement et d'une grande facilité de montage, l'organe de rappel élastique avec amortissement incorporé, qui peut être qualifié d'organe visco-élastique rotatif, peut être solidarisé à un support entraîné par le moyeu de sorte que seule la bielle rigide soit disposée en avant ou en arrière des moyens de liaison d'une pale au moyeu, afin que la surface frontale de l'ensemble ainsi formé puisse être diminuée.

On comprend également qu'en dissociant les rotules d'articulation du dispositif de l'organe de rappel élastique avec amortissement incorporé, et en les montant aux extrémités de la bielle rigide, on puisse réduire le coût de maintenance, en facilitant l'entretien et en particulier les opérations de remplacement des rotules, lorsqu'elles sont usées.

Afin de simplifier encore la structure et de réduire son coût, il est avantageux que la couronne mince en matériau visco-élastique soit un tronc de cylindre de section circulaire et que les surfaces de révolution coaxiales correspondantes des armatures rigides sur lesquelles les parois interne et externe de la couronne mince sont adhérisées soient également des cylindres.

Cependant, afin d'améliorer la stabilité transversale de l'organe visco-élastique rotatif, les surfaces sensiblement de révolution et coaxiales des armatures et les parois interne et externe correspondantes de la couronne mince en matériau visco-élastique sont au moins partiellement coniques.

Il est en outre avantageux que la couronne mince en matériau visco-élastique adhérisée par ses parois interne et externe sur les surfaces sensiblement coaxiales et de révolution correspondantes des armatures externe et interne soit précontrainte en compression entre les armatures.

Cette précontrainte de compression dans l'élastomère visco-élastique est favorable à la tenue de l'accostage de l'élastomère sur les armatures, et améliore encore la stabilité transversale de l'organe visco-élastique rotatif.

Afin de faciliter le montage et le démontage de la liaison entre le levier et la bielle rigide du dispositif selon l'invention, le levier, qui est en saillie sensiblement radiale vers l'extérieur de l'organe visco-élastique rotatif, sur l'armature externe de ce dernier, comprend à son extrémité radiale externe une chape à deux joues entre lesquelles est montée la première rotule de la bielle rigide.

Dans un tel dispositif, la minceur de la couronne de matériau visco-élastique, conformée en couche tubulaire de faible épaisseur radiale entre les armatures externe et interne, toutes deux avantageusement tubulaires et coaxiales, permet à cette couronne de former simultanément un palier de guidage de la rotation de l'armature externe autour de l'armature interne, ce palier étant capable d'encaisser les efforts tranchants en traction et en compression.

Dans un mode de réalisation avantageux, il est en outre préférable que les armatures interne et externe présentent sensiblement la même dimension axiale, et que les deux joues de la chape du levier soient sensiblement planes, sensiblement parallèles l'une à l'autre, et s'étendent sensiblement perpendiculairement à l'axe de l'organe visco-élastique rotatif, et sensiblement symétriquement l'une de l'autre par rapport à un plan radial médian, perpendiculaire à l'axe de l'organe à la moitié de ladite dimension axiale, et dans lequel est situé le centre de la première rotule de la bielle, cette première rotule étant retenue dans la chape du levier par un axe parallèle à l'axe de l'organe visco-élastique rotatif. On assure ainsi un excellent accouplement entre la bielle et le levier de l'armature externe de l'organe visco-élastique rotatif, pour une meilleure sollicitation en rotation de cette armature externe par rapport à l'armature interne de l'organe.

Lorsque chaque dispositif d'amortissement et de rappel élastique selon l'invention est monté de sorte que son organe visco-élastique rotatif encaisse les mouvements absolus en traînée d'une pale par rapport au moyeu, il est préférable que les parois interne et externe de la couronne mince de matériau visco-élastique, ainsi que la surface externe de l'armature interne et la surface interne de l' armature externe auxquelles lesdites parois de la couronne mince sont adhérisées, présentent chacune une forme biconique sensiblement symétrique, convergeant vers sa partie centrale, en direction axiale. Ceci permet d'accroitre la stabilité transversale de l'organe visco-élastique rotatif dans son mode de réalisation avantageusement simple, ne comprenant qu'une seule couronne de matériau visco-élastique.

Dans ce cas, cette couronne mince de matériau visco-élastique de forme biconique est en outre de préférence constituée de deux moitiés tronconiques sensiblement symétriques l'une de l'autre et tournées l'une vers l'autre par leur petite base, l'armature interne est constituée de deux moitiés indépendantes, sensiblement symétriques l'une de l'autre, et dont la face latérale externe de chacune est tronconique et présente sa petite base tournée vers celle de l'autre moitié d'armature interne, chaque moitié d'armature interne étant adhérisée à l'une respectivement des moitiés de la couronne biconique en étant axialement espacée au repos de l'autre moitié d'armature interne, et en étant axialement comprimée en butée contre l'autre moitié d'armature interne au montage de l'organe visco-élastique rotatif, afin de précontraindre en compression le matériau visco-élastique des deux moitiés tronconiques de cette couronne mince biconique.

Ces caractéristiques techniques relatives à la forme biconique des armatures et de la couronne d'élastomère ainsi qu'à la précontrainte en compression dans l'élastomère sont favorables à la tenue de l'ancrage par vulcanisation de l'élastomère sur les armatures et à la stabilité transversale de l'organe visco-élastique rotatif, ce qui est particulièrement apprécié lorsqu'il est destiné à encaisser les mouvements absolus en traînée d'une pale par rapport au moyeu.

Afin de faciliter encore la réalisation d'un tel dispositif et les opérations d'entretien sur celui-ci, la bielle rigide du dispositif est avantageusement rectiligne et de longueur réglable, chacune de ses extrémités étant constituée d'un embout à rotule amovible monté axialement réglable par rapport à un corps central de bielle. On peut ainsi facilement remplacer les rotules par remplacement des embouts à rotule correspondants, et ajuster la longueur de la bielle rigide à la distance nécessaire à un bon fonctionnement du dispositif, entre la chape d'extrémité du levier de l'armature externe de l'organe visco-élastique rotatif et le point d'ancrage de la seconde rotule de la bielle sur le pied de pale ou les moyens de liaison au moyeu qui lui sont solidaires.

L'invention a également pour objet une tête de rotor de giravion, avantageusement équipée d'un dispositif d'amortissement et de rappel élastique en traînée conforme à l'invention, et tel que présenté ci-dessus.

A cet effet, la tête de rotor de giravion selon l'invention, du type comprenant
- un moyeu, entrainé en rotation par un mât-rotor autour d'un axe du rotor, et, pour chaque pale du rotor
- une partie d'attache fourchue, solidaire en mouvement du pied de la pale, et à deux branches radiales internes espacées l'une de l'autre dans la direction de l'axe du rotor,
- des moyens de retenue et d'articulation de la pale sur le moyeu, qui sont au moins partiellement logés dans une cavité du moyeu et entre les branches radiales de la partie d'attache fourchue, et qui comprennent au moins une butée lamifiée élastomérique, retenue entre un support radial externe solidaire du moyeu et un support radial interne solidaire des deux branches radiales de la partie d'attache fourchue, et autorisant des mouvements angulaires alternés de la pale en traînée dans le plan de rotation des pales du rotor, et
- un organe de rappel élastique avec amortissement incorporé de la pale en traînée, fonctionnant par cisaillement d'un matériau visco-élastique à grande rémanence aux déformations, interposé entre deux armatures rigides mobiles l'une par rapport à l'autre, et tel qu'une première armature de l'organe est accouplée au pied de la pale tandis que la seconde armature de l'organe est accouplée à un support dudit organe, entrainé par le moyeu en rotation autour de l'axe du rotor et non solidaire en mouvement du pied de la pale, se caractérise en ce qu'elle comporte un dispositif d'amortissement et de rappel élastique en traînée selon l'invention et tel que présenté ci-dessus, dont la bielle rigide est articulée par sa seconde rotule sur ladite partie d'attache fourchue, et dont la seconde armature est l'armature interne fixée audit support d'organe de sorte que le levier solidaire de la première armature, qui est l'armature externe dudit organe, est incliné sur la direction passant par l'axe dudit organe et par le centre d'articulation de ladite seconde rotule, afin que tout mouvement angulaire en traînée de la pale soit transmis par la bielle au levier et à l'armature externe de l'organe, qui sont déplacés en rotation par rapport à l'armature interne, autour de l'axe de l'organe, de manière à solliciter la couronne mince de matériau visco-élastique en cisaillement en direction circonférentielle autour de son axe, et à assurer un amortissement en rotation des mouvements de rotation relative des deux armatures en exerçant un rappel élastique en rotation de ces deux armatures vers une position relative initiale correspondant à une position neutre de la pale en traînée.

Il est clair qu'une telle tête de rotor bénéficie directement des avantages présentés ci-dessus du dispositif d'amortissement et de rappel élastique en traînée selon l'invention.

Sur une telle tête de rotor, le positionnement de l'organe de rappel élastique avec amortissement incorporé de chaque dispositif selon l'invention est avantageusement assuré si l'armature interne dudit organe est fixée sur le support dudit organe de sorte que l'axe dudit organe soit sensiblement parallèle à l'axe du rotor. Ceci a pour avantage que la couronne de matériau visco-élastique peut être cisaillée en rotation autour d'un axe sensiblement parallèle à l'axe du rotor par des déplacements de la bielle rigide sensiblement contenus dans le plan de traînée de la pale considérée.

Dans ce cas, il est avantageux que la seconde rotule soit retenue entre les deux joues d'une chape en saillie latérale sur la pièce d'attache fourchue correspondante, d'un côté de l'axe longitudinal et de changement de pas de cette pièce d'attache fourchue et de la pale correspondante, de préférence de sorte que le centre de cette seconde rotule soit situé sensiblement dans le plan de traînée de la pale passant par ledit axe longitudinal. En outre, les première et seconde rotules de chaque bielle sont alors avantageusement retenues respectivement sur le levier et sur la pièce d'attache fourchue correspondants par des axes parallèles à l'axe de l'organe visco-élastique rotatif correspondant, le centre de la première rotule étant de préférence radialement à l'extérieur de l'axe dudit organe, par rapport à l'axe du rotor, de sorte que l'organe visco-élastique rotatif puisse être sollicité par un grand bras de levier d'actionnement en traînée, par rapport au centre d'articulation en traînée de la pale. Ceci est favorable à un rappel élastique efficace en traînée, permettant de placer la première fréquence propre de traînée de la pale à une valeur suffisamment éloignée de la vitesse nominale de rotation du rotor et compatible avec le taux d'amortissement apporté par les matériaux visco-élastiques de façon à contrôler les risques d'apparition du phénomène vibratoire dit de "résonance-sol".

Selon un exemple avantageux de réalisation, la partie d'attache fourchue est une pièce sensiblement conformée en manchon dans sa portion radiale centrale, entre ses branches radiales internes formant une chape radiale interne de liaison aux moyens de retenue et d'articulation de la pale au moyeu, et une chape radiale externe de liaison au pied de pale, et cette portion centrale en manchon est d'une seule pièce, de son côté tourné vers l'organe correspondant de rappel élastique avec amortissement incorporé par rapport à son axe longitudinal, avec les joues en saillie latérale de la chape de retenue de la seconde rotule, et, du côté opposé, avec un levier de changement de pas, qui est incliné en saillie latérale et vers le moyeu.

Comme déjà mentionné ci-dessus, dans la tête de rotor selon l'invention, les moyens de retenue et d'articulation de chaque pale sur le moyeu sont avantageusement constitués par une butée lamifiée sphérique, dont le centre se trouve à l'intersection des axes de changement de pas, de battement et de traînée de la pale correspondante.

Ainsi, la tête de rotor peut être telle que son moyeu comporte un unique plateau radial, percé d'alvéoles en nombre égal au nombre des pales du rotor, et formant chacun la cavité de logement partiel de la butée sphérique lamifiée correspondante, dont le support radial externe est fixé sur le bord externe de l'alvéole, et dont le support radial interne traverse librement l'alvéole et est fixé en entretoise entre les branches radiales internes de la pièce d'attache fourchue correspondante, de part et d'autre du plateau radial, ce qui correspond à une tête de rotor réalisée selon les enseignements du brevet français 2 427 251 de la demanderesse, sauf pour ce qui concerne la structure et le montage des organes de rappel élastique avec amortissement incorporé en traînée des pales.

Mais il est également possible que, sur la tête de rotor selon l'invention, le moyeu comporte deux plateaux radiaux espacés l'un de l'autre dans la direction de l'axe du rotor, et entre lesquels est logée la butée sphérique lamifiée d'articulation de chaque pale sur le moyeu, le support radial interne correspondant étant monté en entretoise entre les branches radiales internes de la partie d'attache fourchue correspondante, lesquelles branches radiales présentent des évidements et sont engagées entre les plateaux radiaux du moyeu, et le support radial externe de la butée lamifiée sphérique étant également monté en entretoise entre les bords radiaux des plateaux, en traversant les évidements des branches radiales de la partie d'attache fourchue, la tête de rotor étant alors réalisée selon les enseignements du brevet français 2 456 034 de la demanderesse, sauf à nouveau pour ce qui concerne la structure et le montage des organes de rappel élastique avec amortissement incorporé en traînée des pales.

En outre, la tête de rotor selon l'invention peut également être telle qu'elle comporte un mât-moyeu tubulaire intégré, percé, pour chaque pale, d'au moins une ouverture de passage d'une branche radiale interne de la partie d'attache fourchue correspondante, la butée lamifiée sphérique correspondante étant logée au moins en partie à l'intérieur du mât-moyeu tubulaire intégré, avec son support radial externe fixé sur une partie périphérique du mât-moyeu et son support radial interne fixé en entretoise entre les branches radiales internes de la partie d'attache fourchue correspondante, la tête de rotor étant alors réalisée conformément aux enseignements des brevets français 2 584 995 et 2 584 996 de la demanderesse, sauf une fois encore pour ce qui concerne la structure et le montage des organes de rappel élastique avec amortissement incorporé des pales en traînée.

Dans ces différentes réalisations de tête de rotor selon l'invention, le dispositif d'amortissement et de rappel élastique en traînée selon l'invention peut être monté selon un premier mode préféré d'implantation, dans lequel, pour chaque pale, le support de l'organe de rappel élastique avec amortissement incorporé solidarise l'armature interne de cet organe directement au moyeu.

Ce premier exemple préféré d'implantation est intéressant et particulièrement bien adapté pour des rotors comportant un faible nombre de pales, trois pales par exemple, car il subsiste alors toujours une zone disponible sur la périphérie du moyeu, entre les parties d'attache fourchue de deux pales voisines du rotor, pour y fixer l'armature interne de l'organe visco-élastique rotatif du dispositif d'amortissement et de rappel élastique de l'une de ces deux pales.

Dans cet exemple d'implantation, il est de plus avantageux, pour chaque pale, que la première rotule de la bielle soit retenue sur le levier de l' armature externe de l'organe visco-élastique rotatif correspondant de sorte que le centre de cette première rotule soit sensiblement situé sur l'axe de battement de la pale. Ceci a pour effet avantageux de rendre le fonctionnement du dispositif d'amortissement et de rappel élastique en traînée sensiblement indépendant des mouvements de battement de la pale correspondante.

L'organe visco-élastique rotatif, ou organe de rappel élastique avec amortissement incorporé de chaque pale peut être monté à la périphérie du moyeu, directement entre les bords radiaux des deux plateaux radiaux du moyeu, lorsque ce dernier est réalisé comme dans le brevet français 2 456 034, mais, si le moyeu est réalisé comme dans les brevets français 2 427 251, 2 584 995 et 2 584 996, il est possible que l'organe visco-élastique rotatif à la périphérie du moyeu soit monté en porte-à-faux, en saillie radiale vers l'extérieur du moyeu.

Dans l'un et l'autre cas, l'armature interne de chaque organe visco-élastique rotatif peut être solidarisée au moyeu par au moins une bride de support sensiblement radiale, fixée au moyeu radialement à l'intérieur d'une ceinture composite de renfort que ce moyeu peut comporter. Ce premier exemple d'implantation du dispositif selon l'invention est donc compatible avec la présence d'au moins une ceinture ou sangle composite de renfort sur le moyeu.

Dans ce premier exemple d'implantation, il est en outre avantageux que chaque organe visco-élastique rotatif soit monté sur le moyeu de sorte que son axe et le centre de la première rotule de la bielle rigide soient situés sensiblement dans un même plan radial passant par l'axe du rotor et par la bissectrice des axes de changement de pas de la pale correspondante et d'une pale immédiatement voisine, en position neutre de traînée des pales. Dans cette réalisation, la position des organes visco-élastiques rotatifs sur le moyeu ne gêne pas non plus les mouvements des leviers de commande de pas des pales, qui sont toujours sensiblement en saillie latéralement, entre deux pales voisines du rotor.

Mais il est également possible que, selon un second exemple préféré d'implantation du dispositif d'amortissement et de rappel élastique selon l'invention sur une tête de rotor également selon l'invention, et pour chaque pale, le support de l'organe de rappel élastique avec amortissement incorporé correspondant soit constitué par la partie d'attache fourchue d'une pale immédiatement voisine du rotor, de sorte que la bielle rigide correspondante soit montée en tirant interpales, reliant les parties d'attache fourchue de ces deux pales voisines.

Ce second exemple d' implantation est plus avantageux que le premier pour les rotors comportant un nombre de pales relativement élevé, par exemple quatre pales ou plus, pour lesquels la périphérie du moyeu est encombrée par les parties d'attache fourchue des pales et les leviers de commande de pas équipant ces parties, ce qui ne laisse pas de place disponible sur le moyeu pour la fixation des organes visco-élastiques rotatifs.

Dans ce second exemple d'implantation, chaque organe visco-élastique rotatif est de préférence logé et fixé par son armature interne dans la pièce d'attache fourchue de la pale voisine, de sorte que l'axe de cet organe coupe l'axe longitudinal et de changement de pas de la pièce d'attache fourchue de la pale voisine.

Dans ce cas, il est avantageux d'utiliser des parties d'attache fourchue réalisées, comme présenté ci-dessus, sous la forme de pièces conformées en manchon dans leur portion centrale, en direction radiale, car chaque organe visco-élastique rotatif est alors avantageusement retenu dans ladite portion centrale en manchon de la partie d'attache fourchue correspondante, cette portion centrale en manchon présentant, d'un côté de son axe longitudinal, une ouverture latérale de passage de la connexion de la première rotule de la bielle correspondante au levier correspondant, incliné radialement vers l'extérieur par rapport à l'axe de l'organe et latéralement vers la pièce d'attache fourchue voisine, a laquelle la bielle correspondante est reliée en tirant interpales, tandis que du côté opposé de son axe longitudinal, ladite portion centrale en manchon présente une autre ouverture latérale, entre les deux joues, en saillie latérale vers l'extérieur, de la chape de retenue de la seconde rotule de la bielle reliée à l'organe visco-élastique rotatif logé dans la partie d'attache fourchue voisine de l'autre côté.

Dans cette réalisation, on note que le logement de chaque organe visco-élastique rotatif à l'intérieur d'une portion centrale en manchon est aisé, du fait que cette portion en manchon fait suite aux deux branches radiales internes, dont l'écartement permet l'accessibilité à l'intérieur de cette portion en manchon, et que la mise en place de la bielle rigide de liaison à la portion en manchon pour une pale voisine ne présente aucune difficulté, lorsque le nombre de pales du rotor augmente.

Cette disposition, dans laquelle les bielles rigides des dispositifs d'amortissement et de rappel élastique sont montées en tirants interpales, est à rapprocher de la demande de brevet français 88 05816 de la demanderesse, relative à une tête de rotor de giravion à tirants interpales de rappel élastique avec amortissement incorporé. En effet, chaque dispositif selon l'invention, avec son organe visco-élastique rotatif monté dans une pièce fourchue de liaison d'une pale au moyeu, et sa bielle rigide reliée à la pièce d'attache fourchue d'une pale voisine, joue le même rôle qu'un tirant de rappel élastique avec amortissement incorporé comportant, dans la demande de brevet précitée, un empilage alterné de plaques parallèles rigides et de plaques en matériau visco-élastique, selon une structure générale connue de l'état de la technique présenté ci-dessus.

Cependant, le dispositif selon l'invention présente avantageusement, par rapport à la disposition montrée dans cette demande de brevet 88 05816, une moindre surface frontale et, par conséquent, une traînée plus faible.

La présente invention sera mieux comprise, et d'autres caractéristiques et avantages de l'invention apparaîtront à la lecture de la description donnée ci-dessous, à titre non limitatif, de deux exemples de réalisation décrits en référence aux dessins annexés sur lesquels :
- la figure 1 est une vue schématique et partielle en plan, en partie coupée et avec des arrachements partiels, d'une tête de rotor tripale d'hélicoptère équipée de dispositifs d'amortissement et de rappel élastique des pales en traînée, selon l'invention,
- la figure 2 est une vue en partie en coupe selon II-II de la figure 1 et en partie en élévation latérale, pour la même tête de rotor tripale,
- la figure 3 est une vue en coupe selon III-III de la figure 1,
- la figure 4 est une vue partielle en plan, analogue à la figure 1, pour une tête de rotor quadripale avec dispositifs d'amortissement et de rappel élastique en traînée, selon l'invention,
- la figure 5 est une vue partielle en coupe selon V-V de la figure 4, et,
- la figure 6 est une vue en partie en élévation latérale et en partie en coupe selon VI-VI de la figure 4.

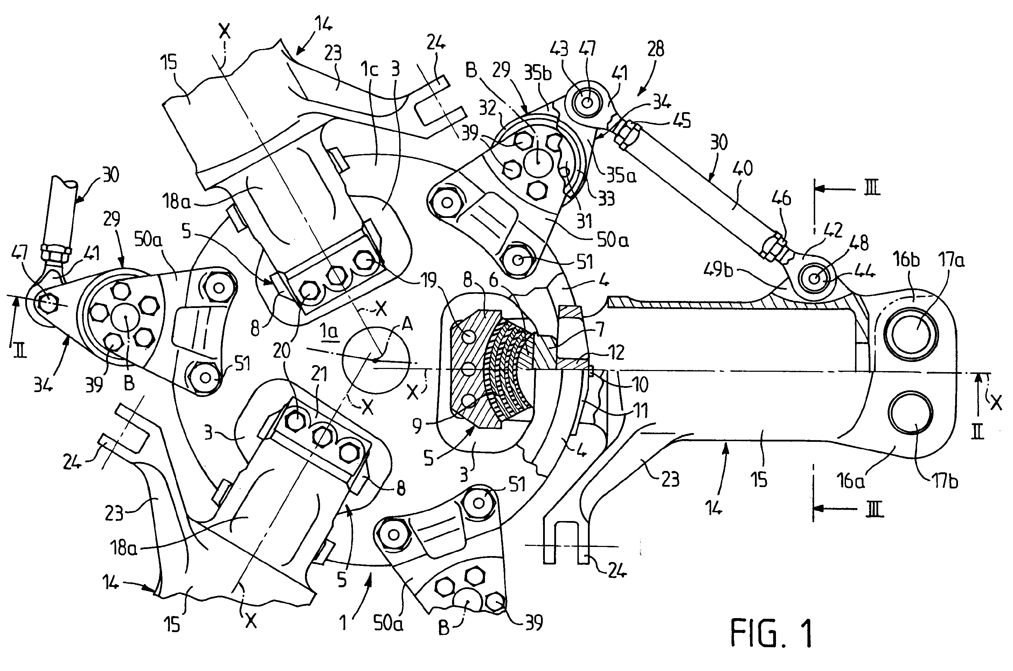

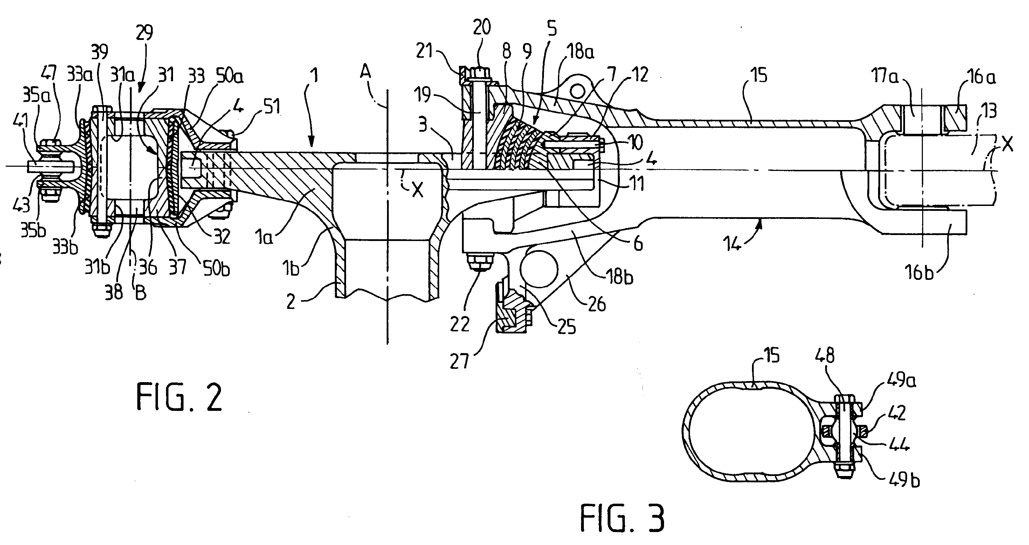

Sur les figures 1 et 2, on a représenté schématiquement la tête d'un rotor principal et tripale d'un hélicoptère. Cette tête de rotor comporte un moyeu 1 rigide et d'une seule pièce avec le mât-rotor tubulaire 2. L'ensemble du moyeu rigide 1 et du mât-rotor 2 peut être constitué par une unique pièce métallique, réalisée à partir d'une ébauche matricée ou forgée. En variante, cet ensemble peut être réalisé en structure composite, constituée essentiellement au niveau du moyeu 1, par un empilement de couches de tissu de fibres synthétiques et/ou minérales à haute résistance mécanique, qui sont enduites et agglomérées par une résine synthétique durcie. Cet ensemble est entrainé en rotation autour de l'axe A du rotor par le pied (non représenté) du mât-rotor 2 accouplé à la sortie d'une boîte de transmission principale de l'hélicoptère. Le moyeu 1 est constitué de la façon suivante : sa partie centrale la présente une symétrie de révolution autour de l'axe A du rotor et est raccordée à la partie supérieure du mât tubulaire 2 du rotor par une partie tronconique 1b, tandis que sa partie centrale la se prolonge radialement (par rapport à l'axe A) vers l'extérieur par une partie périphérique ou plateau 1c, de pourtour sensiblement circulaire, comme visible sur la figure 1. La partie périphérique 1c du moyeu 1, en forme de plateau ou d'anneau plat, est traversée dans la direction de l'axe A du rotor, par autant d'alvéoles 3 que le rotor comporte de pales, c'est-à-dire trois alvéoles dans cet exemple. Chacun de ces alvéoles 3, qui peut avoir en plan par exemple la forme sensiblement trapézoïdale ou en haricot visible sur la figure 1, s'étend en direction radiale depuis la partie centrale 1a du moyeu jusque dans sa partie périphérique 1c, dans laquelle l'alvéole 3 est délimitée par une face radiale externe s'étendant dans un plan parallèle à l'axe A et séparée de la face radiale externe de la partie périphérique 1c du moyeu 1 par un bord de ce moyeu suffisamment large pour qu'une gorge périphérique, s'ouvrant radialement vers l'extérieur dans la face radiale externe de la périphérie 1c du moyeu 1, soit ménagée dans cette partie périphérique 1c et sur le pourtour du moyeu 1. Dans cette gorge est logée une ceinture de renfort 4 de structure composite, constituée par exemple par un enroulement de bandes superposées de stratifils unidirectionnels de filaments organiques et/ou minéraux de grande résistance mécanique agglomérés les uns aux autres par une résine synthétique d' imprégnation polymérisée, qui rigidifie également les unes aux autres les bandes superposées de stratifils formant la ceinture 4. L'ensemble ainsi formé par le moyeu 1 entouré de sa ceinture de renfort composite 4 et par le mât rotor 2 présente, grâce à la structure qui vient d'être décrite, une grande résistance mécanique, en particulier aux tractions centrifuges et aux efforts de flexion appliqués à la partie périphérique 1c du moyeu 1.

Pour chacune des trois pales du rotor, une butée lamifiée sphérique d'un type connu, désignée dans son ensemble par 5, est logée dans un alvéole 3 correspondant et retenue contre le bord externe de ce dernier. Cette butée lamifiée sphérique 5 comprend une armature radiale externe métallique 6, par exemple en alliage d' aluminium ou de titane, dont la partie radiale interne est conformée en calotte sphérique convexe, tandis que sa partie radiale externe comporte deux oreilles 7 engagées respectivement au-dessus et au-dessous du bord de la partie périphérique 1c du moyeu 1, dans sa zone comprise entre l'alvéole 3 et la face radiale externe du moyeu 1. La butée lamifiée sphérique 5 comporte également une armature métallique radiale interne 8, du même métal que l'armature radiale externe 6, et dont la partie radiale externe présente un évidement en calotte sphérique concave. Entre la surface sphérique convexe de l'armature radiale externe 6 et la surface sphérique concave de l'armature radiale interne 8 de la butée sphérique lamifiée est interposé un empilement alterné 9 de calottes métalliques rigides, en forme de portions de sphères sensiblement concentriques, et de couches d'élastomère, l'ensemble de l'armature externe 6, de l'armature interne 8 et des calottes métalliques et des couches d'élastomère de l'empilement alterné 9 étant assemblé par vulcanisation de manière à former un corps qui transmet les compressions axiales, mais qui est déformable élastiquement par cisaillement des couches d'élastomère de l'empilement 9, de façon à permettre des mouvements relatifs de rotation de l'armature externe 8 par rapport à l'armature interne 6 dans toutes les directions autour d'un centre de rotation unique.

La butée lamifiée sphérique 5 est fixée au moyeu 1 par son armature externe 6 appliquée contre la face radiale externe de l'évidement 3 correspondant et qui chevauche le bord de la partie périphérique 1c du moyeu au niveau de cet alvéole 3 par ses deux oreilles 7, dont chacune est fixée par une vis 10 contre une oreille radiale 12 d'un étrier 11, qui chevauche ce bord de la partie périphérique 1c du moyeu 1 de sorte que ses oreilles 12 s'étendent respectivement au-dessus et au-dessous de ce bord et radialement de l'extérieur vers l'intérieur, en regard des oreilles 7 de l'armature externe 6, contre lesquelles elles sont amenées en butée par les vis 10. Cet étrier 11 et l'armature externe 6 de la butée lamifiée sphérique 5 sont ainsi rigidement liés l'un à l'autre en entourant non seulement le bord du moyeu 1 mais également la ceinture composite 4 entourant ce dernier. Cette fixation de la butée sphérique lamifiée 5 sur le moyeu 1 est assurée de sorte que le centre unique de rotation de cette butée 5 soit situé dans la ceinture 4, et de préférence dans le plan médian de cette dernière, perpendiculairement à l'axe A du rotor.

Chaque pale du rotor est reliée par son pied, tel que le pied de pale 13, représenté en traits mixtes sur la figure 2, à la butée lamifiée sphérique 5 correspondante, constituant les moyens d'articulation et de retenue de la pale sur le moyeu 1, par une pièce d'attache fourchue repérée dans son ensemble en 14, qui est solidaire du pied 13 de la pale correspondante en prolongeant radialement celle-ci vers le moyeu 1 et en étant centrée sur l'axe longitudinal de changement de pas X-X de la pale correspondante. Dans sa portion centrale, en direction radiale par rapport à l'axe A du rotor ou selon son axe longitudinal X-X, cette pièce d'attache 14 est conformée en manchon 15 disposé entre deux chapes radiales, formant chacune l'une des extrémités de la pièce d'attache 14. Ainsi, la chape d'extrémité radiale externe de cette pièce 14 est constituée de deux branches 16a et 16b sensiblement planes, parallèles l'une à l'autre et perpendiculaires à l'axe A du rotor, et espacées l'une de l'autre selon cet axe pour recevoir entre elles le pied de pale 13 correspondant. Ce pied de pale 13 est retenu entre les deux branches 16a et 16b de cette chape par deux axes 17a et 17b, parallèles à l'axe A du rotor et centrés dans un plan perpendiculaire à l'axe longitudinal X-X de changement de pas de la pale et de la pièce d'attache 14, et symétriquement de part et d'autre de cet axe X-X. L'un de ces deux axes, par exemple 17a, est amovible et engagé, comme l'autre axe 17b dans des perçages coïncidants ménagés dans les branches 16a et 16b de la chape et dans le pied de pale 13. L'axe amovible 17a est normalement immobilisé, par tous moyens connus tels qu'une agrafe métallique, dont l'enlèvement permet l'extraction de l'axe amovible 17a, de sorte qu'après cette extraction il soit possible de replier la pale en la faisant pivoter par son pied 13 autour de l'autre axe 17b par exemple vers l'arrière de l'hélicoptère, en position de parcage. Dans sa partie d'extrémité radiale interne, la pièce d'attache 14 est également conformée en chape radiale à deux branches radiales internes 18a et 18b sensiblement planes, dont la branche supérieure 18a prolonge la partie supérieure de la portion en manchon 15, alors que la branche inférieure 18b prolonge la partie inférieure de cette même portion en manchon 15, les deux branches 18a et 18b s'écartant l'une de l'autre du manchon 15 vers leurs extrémités radiales internes en s'étendant l'une, 18a, au-dessus et l'autre, 18b, au-dessous du moyeu 1 et de la butée sphérique lamifiée 5 correspondante, sans contact avec le moyeu et l'empilement alterné 9 et l'armature externe 6 de la butée lamifiée 5, mais en étant solidarisées, par leurs extrémités radiales internes, à l'armature radiale interne 8 de cette butée lamifiée 5. Cette solidarisation est réalisée à l'aide de trois boulons 19, parallèles à l'axe A du rotor, et dans un même plan perpendiculaire à l'axe X-X de la pièce 14, chacun de ces boulons 19 ayant une tige qui traverse des perçages alignés ménagés dans les extrémités radiales internes des deux branches 18a et 18b ainsi que dans la partie radiale interne et massive de l'armature interne 8 de la butée lamifiée 5, chaque boulon 19 ayant une tête 20 qui applique contre la surface supérieure de la branche supérieure 18a une butée haute de battement 21 pour la pale considérée, par l'effet d'un serrage assuré par un écrou 22 vissé et retenu sur l'extrémité inférieure filetée de la tige de boulon 19 qui fait saillie sous la face inférieure de la branche inférieure 18b, comme représenté sur la figure 2. Ainsi, l'armature interne 8 de la butée sphérique lamifiée 5 est montée en entretoise rigide entre les extrémités radiales internes des deux branches 18a et 18b de la pièce 14 d'attache de la pale au moyeu par l'intermédiaire de cette butée sphérique lamifiée 5.

Le manchon 15 de cette pièce d'attache 14, métallique, par exemple en alliage d'aluminium, est d'une seule pièce avec un levier de commande de pas 23, en saillie latérale vers l'extérieur du manchon 15, d'un côté de son axe X-X, et légèrement incliné vers le moyeu 1, à partir de l'extrémité du manchon 15 qui est adjacente aux branches de chape 18a et 18b, ce levier de commande de pas 23 se terminant par une chape 24 d'articulation sur l'extrémité supérieure d'une bielle de pas (non représentée) reliée à un dispositif à plateau cyclique également non représenté. On note que le centre de la chape 24 à l'extrémité du levier de commande de pas 23 est voisin de l'axe de battement de la pale correspondante, passant par le centre, situé dans la ceinture 4, de la butée sphérique 5 correspondante.

De plus, la branche inférieure 18b de la pièce d'attache 14 est également solidaire, vers son extrémité voisine du mât-rotor 2, d'une butée basse de battement 25, en saillie sous la face inférieure de la branche inférieure 18b, et rigidifiée par une nervure 26 sensiblement radiale et également d'une seule pièce avec cette branche inférieure 18b. A son extrémité inférieure, la butée basse de battement 25 est équipée d'un patin d'usure amovible 27, destiné à coopérer avec un anneau réciproque (non représenté) de structure connue, qui est monté, de façon connue en soi, autour du mât-rotor 2, et en-dessous du moyeu 1, de façon à limiter les battements des pales vers le bas.

De même, pour limiter les battements des pales vers le haut, chaque butée 21 sur la branche supérieure 18a d'une pièce d'attache 14 peut coopérer avec un mécanisme central à butées escamotables sous l'effet de la force centrifuge, qui n'est pas représenté sur les figures, et peut être fixé sur la partie supérieure et centrale du moyeu 1.

Selon l'invention, un dispositif d'amortissement et de rappel élastique en traînée, désigné dans son ensemble en 28, est associé à chaque pale. Chaque dispositif 28 comprend essentiellement un organe 29 de rappel élastique en rotation avec amortissement incorporé en rotation par cisaillement d'un matériau visco-élastique, et une bielle rigide 30. L'organe 29 est constitué de deux armatures tubulaires rigides coaxiales autour de l'axe B de l'organe, et dont l'une est une armature interne 31 emmanchée dans l'autre armature, ou armature externe 32, et les armatures 31 et 32 sont séparées l'une de l'autre par une couronne mince de matériau visco-élastique, réalisée par une couche tubulaire 33 de faible épaisseur radiale d'un élastomère visco-élastique à grande rémanence aux déformations, qui est vulcanisé aux deux armatures 31 et 32. L'armature externe 32, métallique, par exemple en acier, présente la forme générale externe d'un tronc de cylindre d'axe B et de section circulaire, dont la surface latérale externe cylindrique porte, en saillie radiale vers l'extérieur par rapport à son axe, un levier 34 réalisé sous la forme d'une chape à deux joues 35a et 35b, d'une seule pièce avec l'armature 32, et qui sont planes, parallèles l'une à l'autre, perpendiculaire à l'axe de l'armature 32 et symétriques l'une de l'autre par rapport au plan médian de l'armature 32, perpendiculaires à son axe à la moitié de sa dimension axiale. La surface latérale interne de l'armature externe 32 est biconique et symétrique par rapport à son plan médian, et chacune de ses deux moitiés tronconique converge d'une extrémité axiale de l'armature 32 vers son plan médian.

L'armature interne 31, sensiblement de même dimension axiale et de même axe B que l'armature externe 32, mais en alliage d'aluminium par exemple, est constituée de deux moitiés tubulaires 31a et 31b, séparées et symétriques l'une de l'autre par rapport au plan médian de l'organe 29. Chaque moitié d'armature 31a ou 31b présente une surface latérale externe tronconique, dont la petite base est tournée vers la petite base de l'autre moitié d'armature, l'inclinaison de cette surface tronconique correspondant sensiblement à celle d'une moitié de la surface latérale interne biconique de l'armature externe 32. Chaque moitié d'armature interne 31a ou 31b est constituée d'un court manchon axial 36, de faible épaisseur radiale, par lequel la demi armature interne 31a ou 31b correspondante est adjacente à l'autre, et un voile radial 37 relativement épais, formant une extrémité axiale correspondante de l'armature interne 31, les voiles radiaux 37 étant percés chacun d'une ouverture centrale circulaire d'allègement 38 qui est coaxiale. La couche biconique d'élastomère 33 est constituée de deux moitiés tronconiques 33a et 33b, symétriques l'une de l'autre par rapport au plan médian de l'organe 29, et dont chacune est vulcanisée entre une moitié tronconique de la surface latérale interne biconique de l'armature externe 32 et la surface latérale externe tronconique d'une demi armature interne 31a ou 31b, alors que ces deux demi armatures 31a et 31b sont axialement espacées l'une de l'autre d'un certain jeu, qui est annulé en les amenant en butée axiale l'une contre l'autre, afin de donner une précontrainte de compression dans l'élastomère, avant montage de l'organe sur ledit moyeu. Cette précontrainte est donnée au montage de l'organe 29 lui-même, par l'annulation du jeu axial initialement laissé entre les demi-armatures internes, lorsqu'on adhérise l'élastomère en tenant compte de ce jeu, qui est supprimé en amenant ces demi-armatures internes en butée, ce qui comprime l'éastomère. Cette précontrainte est conservée par la liaison de l'armature interne au moyeu, assurée par le boulonnage maintenant les demi-armatures en butée axiale comme expliqué ci-dessous. Pour permettre cette solidarisation et le maintien de cette précontrainte, les demi armatures internes 31a et 31b sont percées chacune de cinq alésages cylindriques axiaux, régulièrement répartis en direction circonférentielle autour de l'axe B de l'organe 29, et qui traversent les voiles radiaux 37 et débouchent dans l'évidement central interne aux manchons 36 de ces demi armatures 31a et 31b, en étant alignés dans les prolongements les uns des autres d'une demi armature à l'autre, afin d'être traversés par cinq boulons axiaux de fixation 39, comme décrit ci-dessous.

La bielle rigide 30 est une bielle de longueur constante mais réglable, comprenant un corps central rectiligne et cylindrique 40, tubulaire et intérieurement taraudé à chacune de ses extrémités, dans chacune desquelles est vissée, de manière axialement réglable, la tige filetée d'un embout 41 ou 42 à rotule 43 ou 44, chaque embout 41 ou 42 étant bloqué dans la position axiale voulue par rapport au corps de bielle 40 par le serrage contre celui-ci d'un contre-écrou 45 ou 46 également vissé sur la tige filetée de l'embout 41 ou 42.

La bielle 30 est articulée sur l'armature externe 32 de l'organe 29 par la rotule 43 de son embout 41, qui est retenue entre les joues 35a et 35b du levier 34 en forme de chape de cette armature 32, par un pivot 47 d'axe parallèle à l'axe B de l'organe 29 et formé par un ensemble vis-écrou, de sorte que le centre de cette rotule 41 soit dans le plan médian de l'organe 29.

Un dispositif 28, dont la structure vient d'être décrite, est associé à chaque pièce d'attache 14 et monté sur la tête de rotor de la manière suivante : sa bielle 30 est articulée à la pièce d'attache 14 par la rotule 44 de son embout 42, qui est retenue par un pivot 48, d'axe parallèle aux axes 17a et 17b, et formé par un ensemble vis-écrou, entre les deux joues 49a et 49b d'une chape en saillie latérale sur le manchon 15, du côté opposé au levier de commande de pas 23 de ce manchon 15, par rapport à son axe longitudinal X-X. Comme représenté sur la figure 3, les joues de la chape 49a et 49b sont planes, d'une seule pièce avec le manchon 15, et s'étendent parallèlement l'une à l'autre, perpendiculairement au pivot 48 et symétriquement l'une de l'autre de chaque côté du plan de traînée de la pale ou de la pièce d'attache 14, ce plan de traînée correspondant au plan de rotation de la pale et étant défini par son axe longitudinal X-X et par l'axe de battement de la pale, qui est perpendiculaire à cet axe X-X et à l'axe A du rotor en passant par le centre de rotation de la butée sphérique lamifiée 5, ce centre étant lui-même situé sur l'axe X-X et dans la ceinture de renfort 4. Ainsi le centre de la rotule 44 peut être retenu sensiblement dans le plan de traînée de la pale.

L'organe 29 du dispositif 28 est solidarisé par son armature interne 31 à la partie périphérique 1c du moyeu 1, de manière à être monté en porte-à-faux et en saillie latérale vers l'extérieur par rapport à la zone de la périphérie 1c du moyeu qui s'étend entre l'alvéole 3 logeant la butée lamifiée sphérique 5 correspondant à la partie d'attache 14 de la pale considérée, et l'alvéole 3 voisin logeant la butée lamifiée sphérique 5 correspondant à la partie d'attache 14 de la pale voisine de la pale considérée, du même côté de l'axe X-X de cette dernière que les joues 49a et 49b de la chape d'articulation de la rotule 44 d'extrémité de la bielle 40 du même dispositif 28. Cette solidarisation de l'organe 29 au moyeu 1 est assurée par une monture en étrier qui chevauche le moyeu 1, à l'aide de deux brides radiales 50a et 50b, qui sont chacune contre coudées et nervurées, et montées sensiblement symétriquement l'une de l'autre par rapport au plan médian de la partie périphérique 1c du moyeu 1, sensiblement confondu avec le plan de traînée des pales, de sorte que la bride supérieure 50a et la bride inférieure 50b s'étendent, par leur partie radiale interne, radialement nervurée et élargie en direction circonférentielle par rapport à l'axe A, respectivement contre la face supérieure et contre la face inférieure de la partie périphérique 1c du moyeu 1 à laquelle elles sont directement et simultanément fixées par deux boulons 51 d'axe parallèle à l'axe A du rotor, et qui traversent la partie périphérique 1c du moyeu radialement à l'intérieur de la ceinture de renfort 4, comme représenté sur la figure 2. Les parties radiales externes arrondies des brides 50a et 50b, qui sont percées chacune d'un orifice central de même diamètre que l'ouverture 38 de chaque demi armature interne 31a et 31b ainsi que de cinq alésages destinés à être alignés avec les alésages de logement des boulons 39 dans les demi armatures 31a et 31b, s'étendent respectivement contre la face supérieure de la demi armature supérieure 3 la et contre la face inférieure de la demi armature inférieure 31b, qui sont maintenues serrées axialement l'une contre l'autre par les boulons 39, engagés dans les alésages coïncidants des brides 50a et 50b et des demi armatures 31a et 31b, et des écrous vissés et serrés sur les extrémités inférieures filetées des boulons 39 en saillie sous la bride inférieure 50b. Ces boulons 39 assurent le serrage axial des brides 50a et 50b contre les demi armatures 31a et 31b au montage de l'organe 29 lui-même, avant sa solidarisation au moyeu 1 par les autres boulons 51, permettant le montage et le démontage de l'organe 29 par rapport au moyeu 1. Par les boulons 39 de plus, les demi-armatures 31a et 31b demeurent comprimées en butée axiale bout à bout l'une contre l'autre de façon à former l'armature interne 31 biconique en service, et à conserver la précontrainte en compression de l'élastomère de la couche biconique 33. Du fait de son épaisseur relativement faible en direction radiale, la couche tubulaire mince 33 du matériau visco-élastique joue le rôle d'un palier, guidant la rotation de l'armature externe 32 autour de l'armaturee interne 31 lorsque la couche 33 est cisaillée en direction circonférentielle autour de l'axe B de l'organe 29, et encaisse les efforts tranchants en traction et compression. De plus, la précontrainte de compression dans l'élastomère est favorable à la tenue de l'ancrage de l'élastomère sur les armatures interne 31 et externe 32, dont la forme biconique augmente la stabilité transversale de l'organe 29.

Cet organe 29 est monté en porte-à-faux sur le moyeu 1 de sorte que son axe B soit parallèle à l'axe A du rotor, et son plan transversal médian et le centre de la rotule 43 sont dans le plan de traînée de la pale, l'axe B de l'organe 29 et le centre de la rotule 43 étant de plus situés dans le plan radial passant par l'axe A du rotor et par la bissectrice des axes X-X longitudinaux de deux pales voisines entre lesquelles l'organe 29 est monté, lorsque ces pales voisines sont en position neutre en traînée, et le centre de la rotule 43 étant de plus radialement à l'extérieur de l'axe B de l'organe 29 par rapport à l'axe A du rotor, et simultanément voisin de l'axe de battement de la pale liée à la pièce d'attache 14 à laquelle la bielle 30 correspondante est articulée, mais du côté opposé à la chape 24 d'extrémité du levier de commande de pas 23 de cette même pièce d'attache 14, par rapport à l'axe X-X de cette pièce.

Il en résulte que la direction passant par les centres des rotules 43 et 44 de chaque bielle 30 est très inclinée sur l'axe longitudinal X-X de la pièce d'attache 14 correspondante, même lorsque les joues 49a et 49b sont portées par la partie d'extrémité du manchon 15 qui est voisine de la chape radiale externe 16a-16b de la pièce d'attache 14, et dans l'exemple représenté sur la figure 1, la bielle 30 est radialement à l'extérieur de la direction passant par le centre de la rotule 43 et par l'axe B de l'organe 29, et est sensiblement orientée perpendiculairement à la direction radiale passant par l'axe B de l'organe 29 et le centre de la rotule 43, laquelle est retenue sur le levier 34 en saillie radiale vers l'extérieur sur l'armature externe 32 par rapport à l'axe rotor A.

Ainsi, les mouvements angulaires de chaque pale et de sa partie d'attache 14 vers l'avant ou vers l'arrière dans son plan de traînée, et par rapport au sens de rotation du rotor, sollicitent la bielle 30 en traction ou en compression, avec un grand bras de levier par rapport à l'axe de traînée de la pale, qui passe par le centre unique de rotation de la rotule sphérique lamifiée 5 correspondante. La bielle 30 entraine ainsi par son articulation à rotule 43 le levier 34 et l'armature externe 32 de l'organe 29 correspondant en rotation dans un sens ou dans l'autre autour de l'armature interne 31, retenue en position fixe par rapport au moyeu 1, ce qui sollicite la couche tubulaire d'élastomère 33 en cisaillement en direction circonférentielle autour de l'axe B de l'organe 29. Cette couche tubulaire 33 d'élastomère exerce alors une importante force de rappel en rotation de l'armature externe 32 vers sa position initiale de repos autour de l'armature interne 31, cette position initiale correspondant à une absence de déformation en cisaillement de l'élastomère et, par l'intermédiaire de la bielle rigide 30, à une position neutre en traînée de la pale correspondante et de sa pièce d'attache 14. De ce fait, au démarrage et à l'arrêt du rotor, toutes les pales occupent leur position neutre respective, ce qui évite l'apparition d'un important balourd. De plus, du fait de la grande rémanence aux déformations du matériau élastomère de la couche tubulaire 33, les mouvements de rotation relative des armatures interne 31 et externe 32 autour de l'axe B de l'organe 29, et donc les mouvements angulaires de traînée de la pale, sont fortement amortis.

Du fait du grand bras de levier avec lequel l'organe 29 est sollicité, en traînée, par rapport au point d'articulation de la pale correspondante, le rappel élastique de l'organe 29 est suffisamment important pour réduire le premier mode vibratoire en traînée de la pale jusqu'à environ la moitié de la vitesse angulaire nominale de rotation du rotor, ou même à une valeur inférieure si nécessaire, et d'éloigner ainsi les risques d'apparition du phénomène vibratoire de résonance-sol.

Sur cette tête de rotor, chaque organe 29 de rappel élastique avec amortissement incorporé d'une pale en traînée est un organe pouvant être qualifié d'organe visco-élastique rotatif, car il assure par la rotation relative de ses armatures un amortissement et un rappel élastique par cisaillement en direction circonférentielle de la couche tubulaire en élastomère visco-élastique vulcanisé entre les deux armatures tubulaires coaxiales, sollicitées en rotation relative autour de leur axe B commun par les mouvements de traînée de la pale. L'organe visco-élastique rotatif 29, de structure très simple, donc peu coûteux, et de faible encombrement, peut ainsi être très aisément fixé par les brides 50a et 50b, fixées à son armature interne 31, sur une zone de la périphérie 1c du moyeu, entre deux pales voisines, à l'aide de brides de fixation 50a et 50b de structure simple, aisément mises en place au montage de l'organe 29 lui-même, puis au montage de l'ensemble sur le moyeu, et compatibles avec une ceinture de renfort 4 du moyeu 1. De même, l'armature externe 32 de l'organe 29 est aisément reliée à la pièce d'attache 14 de la pale correspondante, par l'intermédiaire de son levier 34 et de la bielle rigide 30, munie à ses extrémités de rotules 43 et 44, faciles à remplacer lorsqu'elles sont usées, par remplacement des embouts amovibles 41 et 42 de la bielle 30, sans qu'il soit nécessaire de démonter l'organe 29. En outre, il est inutile de démonter le dispositif d'amortissement et de rappel élastique 28 si l'on veut pivoter la pale correspondante autour de l'axe 17b. De plus, comme tous les composants de ce dispositif 28 sont sensiblement centrés dans le plan de traînée de la pale correspondante, et que le centre de sa rotule 43 est sensiblement sur l'axe de battement de cette pale, le fonctionnement du dispositif est sensiblement indépendant des mouvements de battement de cette pale.

En outre, comme seule la bielle 30 de faible maître-couple est placée devant ou derrière le manchon 15 de la pièce d'attache 14 correspondante, on peut diminuer la surface frontale de l'ensemble de ce manchon 15 et de la bielle 30, en donnant au manchon 15 une forme aplatie, visible sur la figure 3 représentant le manchon 15 avec une section ovalisée dans le plan de traînée. Ceci permet un affinement aérodynamique d'ensemble de la tête de rotor, et offre une meilleure possibilité de carénage de cette tête de rotor, cette réduction de traînée pouvant être évaluée à 5 à 10 % du CxS du moyeu non caréné, soit de 1 à 2 de la traînée aérodynamique totale de l'hélicoptère.

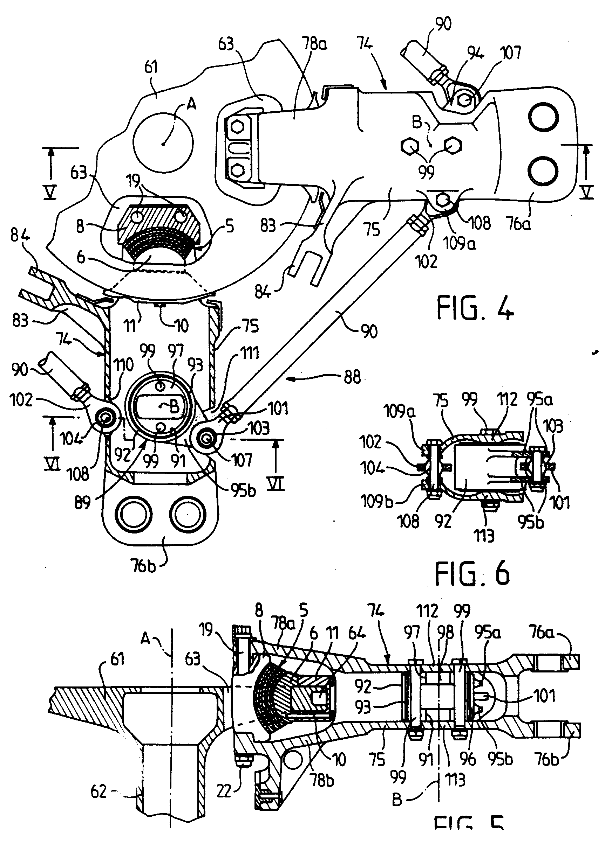

La tête de rotor quadripale représentée sur les figures 4 et 5 est également celle d'un rotor principal d'hélicoptère, et présente de nombreux composants homologues et de nombreuses caractéristiques identiques à ceux et celles de l'exemple des figures 1 à 3, de sorte qu'il n'est donc pas nécessaire de les décrire à nouveau en détail, et qu'on se limite ci-dessous à décrire les différences essentielles présentées par le second exemple des figures 4 à 6 par rapport au premier exemple des figures 1 à 3.

Le moyeu 61 de cette seconde tête de rotor, également d'une seule pièce avec le mât-rotor 62 et entouré d'une ceinture de renfort composite 64, ne se différencie essentiellement de celui des figures 1 et 2 que par le fait qu'il est percé de quatre alvéoles 63 au lieu de trois. Une butée lamifiée sphérique 5, telle que décrite dans l'exemple précédent, est également logée dans chaque alvéole 63 et fixée de la même manière par son armature radiale externe 6 sur le bord externe de l'alvéole 63 et sur la partie correspondante périphérique du moyeu 61, grâce à un étrier 11 et à des vis 10, tandis que son armature radiale interne 8 est fixée de la même manière par des boulons 19 et écrous 22 en entretoise entre les extrémités radiales internes des branches supérieure 78a et inférieure 78b formant une chape radiale interne à l'extrémité tournée vers le moyeu 61 d'un manchon central 75 d'une pièce fourchue 74 d'attache d'une pale au moyeu 61. La partie radiale externe de cette pièce d'attache 74 est également conformée en chape à deux branches 76a et 76b, entre lesquelles le pied de la pale correspondante est retenu par deux axes parallèles, dans les mêmes conditions que dans l'exemple précédent.

Comme dans l'exemple précédent, le dispositif 88 d'amortissement et de rappel élastique en traînée associé à chaque pale comprend une bielle rigide rectiligne 90, de longueur constante mais réglable, équipée à chacune de ses extrémités d'un embout 101 ou 102 à rotule 103 ou 104, et qui est articulée par sa rotule 103 entre les deux joues 95a et 95b d'un levier en forme de chape 94 en saillie radiale vers l'extérieur d'une armature tubulaire externe 92 d'un organe 89 de rappel élastique en rotation avec amortissement incorporé en rotation de la pale en traînée par cisaillement d'une couche tubulaire 93 d'élastomère visco-élastique en direction circonférentielle autour de son axe, entre l'armature tubulaire externe 92 et une armature tubulaire interne coaxiale 91, auxquelles la couche tubulaire 93 d'élastomère est vulcanisée.

Dans ce second exemple, la rotule 104 de la bielle 90 est retenue par un axe 108, parallèle aux boulons 19 et donc perpendiculaire au plan de traînée de la pièce d'attache 74, entre deux joues de chape 109a et 109b, qui sont d'une seule pièce avec le manchon 75, mais en saillie latérale vers l'extérieur de ce dernier du même côté que son levier de commande de pas 83, dont le centre de la chape d'extrémité 84 reste au voisinage de l'axe de battement de la pale correspondante, passant par le centre de rotation de la butée lamifiée sphérique 5 correspondante. De plus, les deux joues 109a et 109b sont planes, parallèles l'une à l'autre et au plan de traînée, et symétriques l'une de l'autre par rapport à ce plan, respectivement au-dessus et au-dessous d'une petite ouverture latérale 110, ménagée dans le côté du manchon 75, de sorte que l'embout 102 et la rotule 104 sont partiellement engagés dans le manchon 75, comme cela est visible sur les figures 4 et 6. L'autre rotule 103 de la bielle 90 est, comme dans l'exemple précédent, retenue par un axe 107 parallèle à l'axe B de l'organe 89 entre les deux joues 95a et 95b, qui sont planes, parallèles l'une à l'autre, perpendiculaires à l'axe B de l'organe 89 et symétriques l'une de l'autre par rapport au plan médian de cet organe, et d'une seule pièce avec l'armature tubulaire externe 92, dont la face latérale externe est cylindrique de section circulaire. Mais l'organe 89, également du type dit visco-élastique rotatif, est d'une structure encore plus simple que dans l'exemple précédent, par le fait que la face latérale interne de l'armature tubulaire externe 92, la face latérale externe de l'armature tubulaire interne 91 et les faces latérales interne et externe de la couche tubulaire d'élastomère 93 sont toutes cylindriques de section circulaire et coaxiales. De plus, l'armature interne 91 est réalisée d'une seule pièce, et constituée d'un manchon en tronc de cylindre à paroi relativement mince 96, dont chaque extrémité axiale est conformée en voile radial relativement épais 97, percé d'une ouverture centrale oblongue 98, les deux voiles radiaux 97 étant chacun percé de deux alésages diamétralement opposés et axialement alignés avec les alésages de l'autre voile radial, pour le passage de boulons 99 de fixation de cette armature interne 91 à un support pour l'organe visco-élastique rotatif 89.

La différence essentielle de ce second exemple par rapport au premier est précisément que le support de l'organe 89 n'est pas un étrier de fixation à la périphérie du moyeu 61, entre deux pièces d'attache 74 voisines, mais le manchon 75 de la pièce d'attache 74 de la pale voisine du côté du levier de commande de pas 83 de la pièce d'attache 74 de la pale associée au dispositif d'amortissement et de rappel élastique 88 considéré, comme cela est clairement représenté sur les figures 4 et 5. En effet, avant l'accouplement de la pièce 74 à la butée lamifiée sphérique 5 et au moyeu 61, l'organe 89, désaccouplé de sa bielle 90, est engagé entre les branches 78a et 78b et introduit dans le manchon 75, entre deux parties longitudinales haute et basse 112 et 113, en forme de plaques sensiblement planes et surépaissies vers l'intérieur du manchon 75, et percées chacune de deux alésages alignés avec ceux de l'autre partie, perpendiculairement au plan de traînée, ces alésages étant centrés sur l'axe longitudinal de la pièce 74 et décalés axialement le long de cet axe d'une valeur correspondant à l'entraxe entre les deux alésages prévus dans l'armature tubulaire interne 91 pour les boulons de fixation 99. Ainsi, ces boulons 99 peuvent être engagés dans les alésages alignés des plaques 112 et 113 du manchon 75 et de l'armature interne 91, et des écrous vissés sur ces boulons pour fixer l'armature interne 91 rigidement dans le manchon 75, de sorte que l'axe B de l'organe 89 coupe l'axe longitudinal de la pièce d'attache 74 en étant perpendiculaire à cet axe longitudinal, et dans une position telle que le levier 94 de l'armature externe 92 soit orienté et incliné à la fois radialement vers l'extérieur, par rapport au moyeu 61 et à l'axe B de l'organe 89, et latéralement vers l'extérieur du manchon 75, en étant dirigé vers une autre ouverture latérale 111, ménagée dans ce manchon 75 du côté opposé à l'ouverture 110. L'extrémité du levier 94 est ainsi légèrement en saillie à l'extérieur du manchon 75, du côté de la bielle 90 correspondante, qui peut ainsi être aisément accouplée au levier par sa rotule 103 et par l'axe de retenue 107.

Dans un tel montage des dispositifs d'amortissement et de rappel élastique 88, chaque organe visco-élastique rotatif 89 est logé et fixé par son armature interne 91, à l'aide de deux boulons 99, à l'intérieur du manchon 75 d'une pièce d'attache 74 voisine de celle de la pale dont les mouvements angulaires en traînée lui sont transmis par la bielle 90 correspondante, chaque bielle 90 étant ainsi montée en tirant interpales muni d'une rotule facilement démontable à chacune de ses extrémités. Il en résulte que chaque bielle 90 n'est sollicitée en traction-compression, pour faire tourner l'armature externe 92 autour de l'armature interne 91 afin de cisailler la couche tubulaire d'élastomère 93 en direction circonférentielle et assurer ainsi un amortissement en rotation et un rappel élastique en rotation, que par les mouvements différentiels de traînée des deux pales entre lesquelles cette bielle 90 est montée, et non, comme dans le premier exemple, par les mouvements absolus en traînée de la pale correspondante par rapport au moyeu.

Cette disposition des bielles 90 en tirants interpales est plus avantageuse pour les rotors comportant quatre pales ou plus, pour lesquels la périphérie du moyeu 61 est encombrée par les pièces d'attache 74 des pales au moyeu, et les leviers de commande de pas 83 de ces pièces74, ces différents organes ne laissant alors que peu d'espace disponible pour la fixation des organes visco-élastique rotatifs tels que 89, bien que leur encombrement soit limité.

Par ailleurs, ce mode d'implantation des dispositifs d'amortissement et de rappel élastique 88 présente les mêmes avantages que dans l'exemple précédent : la compacité de l'organe visco-élastique rotatif 89 et la simplicité de sa structure et de ses moyens de fixation et d'actionnement rendent possible sa disposition à l'intérieur d'un manchon 75 sans qu'il soit nécessaire d'augmenter la section transversale de ce manchon, qui peut rester aplati ou ovalisé dans le plan de traînée, comme représenté sur la figure 6. La traînée aérodynamique d'ensemble de la tête de rotor est ainsi améliorée sensiblement dans les mêmes conditions. De même chaque bielle 90 est très inclinée sur l'axe longitudinal de la pièce d'attache 74 sur laquelle elle est articulée par sa rotule 104, et chaque bielle 90 est sensiblement perpendiculaire au levier 94, c'est-à-dire à la direction passant par l'axe B de l'organe 89 et par le centre de la rotule 103, cette bielle 90 étant radialement à l'extérieur de la direction passant par l'axe B de l'organe 89 et par le centre de l'autre rotule 104, de sorte que l'organe visco-élastique rotatif 89 est sollicité avec un grand bras de levier par rapport au centre de traînée de la pale dont il amortit les mouvements de traînée différentielle par rapport à la pale liée à la pièce d'attache 74 qui le supporte.

Si nécessaire, pour obtenir un amortissement plus élevé, un amortisseur hydraulique de structure connue peut être incorporé dans chacun des organes de rappel élastique avec amortissement incorporé tel que 29 ou 89 des exemples décrits ci-dessus.

Dans ces deux exemples, la tête de rotor a été décrite comme comportant un moyeu réalisé comme décrit dans le brevet français 2 427 251. Mais ce moyeu peut être un moyeu tel que décrit dans les brevets français 2 584 995 et 2 584 996, sans qu'il en résulte de différence sur la structure et le montage des dispositifs d'amortissement et de rappel élastique 28 et 88 décrits ci-dessus. En outre, le moyeu pourrait également être réalisé comme décrit dans le brevet français 2 456 034, sans qu'il en résulte de différence de structure et de montage du dispositif tel que 88 décrit ci-dessus, alors qu'un dispositif tel que 28 pourrait être installé de sorte que son organe visco-élastique rotatif tel que 29 soit fixé par son armature radiale interne directement entre des zones radiales externes des deux plateaux radiaux du moyeu, ou également en porte-à-faux à la périphérie de ce moyeu, auquel il serait relié par une bride radiale supérieure fixée au plateau radial supérieur et par une bride radiale inférieure fixée au plateau radial inférieur du moyeu.

En variante, il est également possible que les parties d'attache fourchues 14 ou 74 ne comportent pas de portion en manchon, mais soient chacune constituée d'une plaque radiale supérieure et d'une plaque radiale inférieure convenablement entretoisées, pour former une chape radiale interne de liaison au moyeu et une chape radiale externe de liaison au pied de pale.

## Revendications

1. Dispositif d'amortissement et de rappel élastique en traînée, pour pale de rotor de giravion sur lequel chaque pale du rotor comporte un pied (13) par lequel elle est accouplée à un moyeu (1, 61) entraîné en rotation autour de l'axe (A) du rotor, et retenue audit moyeu (1, 61) par des moyens d'articulation (5) autorisant des mouvements angulaires de pas et de battement de la pale, ainsi que des mouvements angulaires alternes de la pale en traînée dans le plan de rotation des pales du rotor, ledit dispositif (28, 88) étant du type comportant un organe (29, 89) d'amortissement rotatif muni de moyens permettant l'amortissement du pivotement relatif de deux armatures (31, 91; 32, 92) coaxiales dudit organe, l'une (32, 92) de ces armatures étant reliées par au moins une bielle (30, 90) au pied de la pale (13) ou à un élément (14) qui en est solidaire, l'autre (31, 91) de ces armatures étant solidarisée à un support (50a-50b et 74) non solidaire du pied de la pale (13) quant à ses mouvements angulaires alternés en traînée, de sorte que les mouvements angulaires en traînée de la pale sont transmis par ladite bielle (30, 90) à l'armature à laquelle elle est reliée, l'amortissement du mouvement relatif des deux armatures assurant l'amortissement des mouvements angulaires en traînée de la pale, caractérisé en ce que l'organe (29, 89) d'amortissement dudit dispositif est un organe de rappel élastique fonctionnant par cisaillement d'un matériau visco-élastique (33, 93) à grande rémanence aux déformations interposé entre lesdites deux armatures rigides (31,91; 32, 92), le matériau visco-élastique ayant la forme d'une couronne mince (33, 93) dont les parois internes et externes sont adhérisées respectivement à une surface externe de l'armature interne (31, 91) et une surface interne de l'armature externe (32, 92), lesdites surfaces interne et externe étant des surfaces sensiblement de révolution coaxiale autour de l'axe (B) dudit organe, l'armature externe (32, 92) présentant un levier (34, 94) en saillie sensiblement radiale vers l'extérieur de l'organe (29, 89) et sur lequel est articulée, par une première rotule (43, 103) la bielle (30, 90) précitée, ladite bielle (30, 90) étant également équipée d'une seconde rotule d'articulation (44, 104) destinée à la rendre solidaire du pied de la pale (13) quant à ses mouvements de traînée,
tandis que l'armature interne (31, 91) est destinée à être solidarisée à un support (50a, 50b, 74) entraîne par le moyeu (1, 61) en rotation autour de l'axe (A) du rotor, ledit support (50a, 50b, 74) étant non solidaire de la pale quant à ses mouvements de traînée, mais également de pas et de battement, de sorte que les mouvements angulaires en traînée, et également en pas et en battement, de la pale étant transmis par la bielle (30, 90) au levier (34, 94) et à l'armature externe (32, 92), qui sont ainsi entraînés en rotation par rapport à l'armature interne autour de l'axe (B) dudit organe (29, 89), la couronne de matériau visco-élastique (33, 93) est sollicitée en cisaillement en direction circonférentielle et assure un amortissement en rotation des mouvements relatifs des deux armatures (31, 91; 32, 92) en exerçant un rappel élastique en rotation de ces deux armatures vers une position relative initiale correspondant à une position neutre de la pale en traînée.

2. Dispositif selon la revendication 1, caractérisé en ce que la couronne mince en matériau visco-élastique (93) est un tronc de cylindre de section circulaire et que les surfaces de révolution coaxiales correspondantes des armatures rigides (91, 92) sur lesquelles les parois interne et externe de la couronne mince en matériau visco-élastique sont adhérisées, sont des cylindres.

3. Dispositif selon la revendication 1, caractérisé en ce que les surfaces sensiblement de révolution et coaxiales des armatures rigides (31, 32) et les parois interne et externe correspondantes de la couronne mince en matériau visco-élastique (33) sont au moins partiellement coniques.

4. Dispositif selon la revendication 3, caractérisé en ce que les parois interne et externe de la couronne mince (33) de matériau visco-élastique, ainsi que la surface externe de l'armature interne (31) et la surface interne de l'armature externe (32), auxquelles lesdites parois de la couronne mince (33) sont adhérisées, présentent chacune une forme biconique sensiblement symétrique, convergeant vers sa partie centrale, en direction axiale.

5. Dispositif selon l'une des revendications 1 à 4, caractérisé en ce que la couronne mince en matériau visco-élastique (33) adhérisée par ses parois interne et externe sur les surfaces sensiblement coaxiales et de révolution correspondantes des armatures rigides externe (32) et interne (31), est précontrainte en compression entre lesdites armatures.

6. Dispositif selon la revendication 5, telle que rattachée à la revendication 4, caractérisé en ce que ladite couronne mince (33) de matériau visco-élastique, de forme biconique, est constituée de deux moitiés tronconiques (33a, 33b) sensiblement symétriques l'une de l'autre et tournées l'une vers l'autre par leur petite base, l'armature interne (31) étant constituée de deux moitiés indépendantes,(31a, 31b), sensiblement symétriques l'une de l'autre, et dont la face latérale externe de chacune est tronconique et présente sa petite base tournée vers celle de l'autre moitié d'armature interne, chaque moitié d'armature interne (31a, 31b) étant adhérisée à l'une respectivement des moitiés (33a, 33b) de la couronne biconique (33) en étant axialement espacée au repos de l'autre moitié d'armature interne, et en étant axialement comprimée en butée contre l'autre moitié d'armature interne au montage dudit organe (29), afin de précontraindre en compression le matériau visco-élastique des deux moitiés (33a, 33b) tronconiques de cette couronne biconique (33).

7. Dispositif selon l'une des revendications 1 à 6, caractérisé en ce que ledit levier (34, 94), en saillie sensiblement radiale vers l'extérieur dudit organe (29, 89) sur l'armature externe (32, 92) de ce dernier, comprend à son extrémité radiale externe une chape à deux joues (35a-35b, 95a-95b) entre lesquelles est montée la première rotule (43, 103) de la bielle rigide (30, 90).

8. Dispositif selon la revendication 7, caractérisé en ce que les deux armatures (31, 91 - 32, 92) présentent sensiblement la même dimension axiale, et que les deux joues (35a-35b, 95a-95b) de la chape du levier (34, 94) sont sensiblement planes, sensiblement parallèles l'une à l'autre, et s'étendent sensiblement perpendiculairement à l'axe (B) de l'organe (29, 89), et sensiblement symétriquement l'une de l'autre par rapport à un plan radial médian, perpendiculaire à l'axe (B) de l'organe (29, 89) à la moitié de ladite dimension axiale, et dans lequel est situé le centre de la première rotule (43, 103) de la bielle (30, 90), qui est retenue dans la chape du levier (34, 94) par un axe (47, 107) parallèle à l'axe de l'organe (29, 89).

9. Dispositif selon l'une des revendications 1 à 8, caractérisé en ce que la bielle rigide (30) est rectiligne et de longueur réglable, chacune de ses extrémités étant constituée d'un embout (41, 42) à rotule (43, 44) amovible, monté axialement réglable par rapport à un corps central (40) de bielle.

10. Tête de rotor de giravion, du type comprenant:
- un moyeu (1, 61), entraîné en rotation par un mât-rotor (2, 62) autour d'un axe (A) du rotor, et
pour chaque pale du rotor
- une partie d'attache fourchue (14, 74), solidaire en mouvement du pied (13) de la pale, et à deux branches radiales internes (18a-18b, 78a-78b) espacées l'une de l'autre dans la direction de l'axe du rotor,
- des moyens de retenue et d'articulation de la pale sur le moyeu (1, 61), qui sont au moins partiellement logés dans une cavité (3, 63) du moyeu et entre les branches radiales de la partie d'attache fourchue (14, 74), et qui comprennent au moins une butée lamifiée élastomerique (5), retenue entre un support radial externe (6) solidaire du moyeu (1, 61) et un support radial interne (8) solidaire des deux branches radiales de la partie d'attache fourchue (14, 74), et autorisant des mouvements angulaires alternés de la pale en traînée dans le plan de rotation des pales du rotor, et
- un organe (29, 89) de rappel élastique avec amortissement incorporé de la pale en traînée, fonctionnant par cisaillement d'un matériau visco-élastique à grande rémanence aux déformations interposé entre deux armatures rigides (31-32, 91-92) mobiles l'une par rapport à l'autre, et tel qu'une première armature (32, 92) de l'organe (29, 89) est accouplée au pied (13) de la pale tandis que la seconde armature (31, 91) de l'organe est accouplée à un support (50a-50b, 74) dudit organe, entraîné par le moyeu (1, 61) en rotation autour de l'axe (A) du rotor et non solidaire en mouvement du pied (13) de la pale, ladite tête étant caractérisée en ce qu'elle comporte un dispositif d'amortissement et de rappel élastique en traînée (28, 88) selon l'une des revendications 1 à 9 précédentes, dont la bielle rigide (30, 90) est articulée par sa seconde rotule (44, 104) sur ladite partie d'attache fourchue (14, 74) et dont la seconde armature est l'armature interne (31, 91) fixée audit support d'organe de sorte que le levier (34, 94) solidaire de la première armature, qui est l'armature externe (32, 92) dudit organe (29, 89) est incliné sur la direction passant sur l'axe (B) dudit organe et par le centre d'articulation de ladite seconde rotule (44, 104), afin que tout mouvement angulaire en traînée de la pale soit transmis par la bielle (30, 90) au levier (34, 94) et à l'armature externe (32, 92) de l'organe, qui sont déplacés en rotation par rapport à l'armature interne (31, 91), autour de l'axe (B) de l'organe, de manière à solliciter la couronne mince (33, 93) de matériau visco-élastique en cisaillement en direction circonférentielle autour de son axe (B), et à assurer un amortissement en rotation des mouvements de rotation relative des deux armatures en exerçant un rappel élastique en rotation de ces deux armatures vers une position relative initiale correspondant à une position neutre de la pale en traînée.

11. Tête de rotor selon la revendication 10, caractérisée en ce que l'armature interne (31, 91) dudit organe (29, 89) est fixée sur le support (50a, 50b, 74) dudit organe de sorte que l'axe (B) dudit organe soit sensiblement parallèle à l'axe (A) du rotor.

12. Tête de rotor selon la revendication 11, caractérisée en ce que les première (43, 103) et seconde (44, 104) rotules de chaque bielle (30, 90) sont retenues respectivement sur le levier (34, 94) et sur la pièce d'attache fourchue (14, 74) par des axes parallèles à l'axe (B) de l'organe (29, 89) correspondant, le centre de la première rotule (43, 103) étant de préférence radialement à l'extérieur de l'axe (B) dudit organe, par rapport à l'axe (A) du rotor.

13. Tête de rotor, selon l'une des revendications 10 à 12, caractérisée en ce que la seconde rotule (44, 104) est retenue entre les deux joues (49a, 49b - 109a, 109b) d'une chape en saillie latérale sur la pièce d'attache fourchue (14, 74), d'un côté de l'axe longitudinal (X-X) et de changement de pas de cette pièce d'attache fourchue et de la pale correspondante, de préférence de sorte que le centre de cette seconde rotule (44, 104) soit situé sensiblement dans le plan de traînée de la pale passant par ledit axe longitudinal.

14. Tête de rotor selon la revendication 13, caractérisée en ce que la partie d'attache fourchue (14, 74) est une pièce sensiblement conformée en manchon (15, 75) dans sa portion radiale centrale, entre ses branches radiales internes (18a, 18b - 78a, 78b) formant une chape radiale interne de liaison aux moyens de retenue et d'articulation de la pale au moyeu (1, 61), et une chape radiale externe (16a, 16b - 76a, 76b) de liaison au pied de pale (13), et ladite portion centrale en manchon est d'une seule pièce, de son côté tourné vers l'organe (29, 89) correspondant de rappel élastique avec amortissement incorporé par rapport à son axe longitudinal (X-X), avec les joues (49a, 49b - 109a, 109b) en saillie latérale de la chape de retenue de la seconde rotule (44, 104), et éventuellement, du côté opposé, avec un levier de changement de pas (23, 83), qui est incliné en saillie latérale et vers le moyeu (1, 61).

15. Tête de rotor selon l'une des revendications 10 à 14, caractérisée en ce que les moyens de retenue et d'articulation de chaque pale sur le moyeu (1, 61) sont constitués par une butée lamifiée sphérique (5), dont le centre se trouve à l'intersection des axes de changement de pas, de battement et de traînée de la pale correspondante.

16. Tête de rotor selon la revendication 15, caractérisée en ce que le moyeu (1, 61) comporte un unique plateau radial (1c), percé d'alvéoles (3, 63) en nombre égal au nombre des pales du rotor, et formant chacun la cavité de logement partiel de la butée sphérique lamifiée (5) correspondante, dont le support radial externe (6) est fixé sur le bord externe de l'alvéole (3, 63), et dont le support radial interne (8) traverse librement l'alvéole (3, 63) et est fixé en entretoise entre les branches radiales internes (18a, 18b - 78a, 78b) de la pièce d'attache fourchue correspondante (14, 74), de part et d'autre du plateau radial (1c).

17. Tête de rotor selon la revendication 15, caractérisée en ce que le moyeu comporte deux plateaux radiaux espacés l'un de l'autre dans la direction de l'axe du rotor, et entre lesquels est logée la butée sphérique lamifiée (5) d'articulation de chaque pale sur le moyeu, le support radial interne (8) correspondant étant monté en entretoise entre les branches radiales internes (18a, 18b - 78a, 78b) de la partie d'attache fourchue correspondante (14, 74), lesquelles branches radiales présentent des évidements et sont engagées entre les plateaux radiaux des moyeux, et le support radial externe de la butée lamifiée sphérique étant également monté en entretoise entre les bords radiaux des plateaux, en traversant les évidements des branches radiales de la partie d'attache fourchue.

18. Tête de rotor selon la revendication 15, caractérisée en ce qu'elle comporte un mât-moyeu tubulaire intégré, percé, pour chaque pale, d'au moins une ouverture de passage d'une branche radiale interne de la partie d'attache fourchue correspondante, la butée lamifiée sphérique correspondante étant logée au moins en partie à l'intérieur du mât-moyeu tubulaire intégré, avec son support radial externe fixé sur une partie périphérique du mât-moyeu et son support radial interne fixé en entretoise entre les branches radiales internes de la partie d'attache fourchue correspondante.

19. Tête de rotor selon l'une des revendications 10 à 18, caractérisée en ce que, pour chaque pale, le support (50a, 50b) de l'organe (29) de rappel élastique avec amortissement incorporé solidarise l'armature interne (31) de cet organe directement au moyeu (1).

20. Tête de rotor selon la revendication 19 telle que rattachée à l'une des revendications 15 à 18, caractérisée en ce que, pour chaque pale, la première rotule (43) de la bielle (30) est retenue sur le levier (34) de la première armature (31) de l'organe correspondant (29) de sorte que le centre de cette première rotule (43) soit sensiblement situé sur l'axe de battement de la pale.

21. Tête de rotor selon l'une des revendications 19 et 20, caractérisée en ce que ledit organe (29) de chaque pale est monté à la périphérie du moyeu (1).

22. Tête de rotor selon la revendication 21, caractérisée en ce que ledit organe (29) est monté en porte-à-faux, en saillie radiale vers l'extérieur du moyeu (1).

23. Tête de rotor selon l'une des revendications 21 et 22, caractérisée en ce que l'armature interne (31) dudit organe (29) est solidarisée au moyeu (1) par au moins une bride de support (50a, 50b) sensiblement radiale, fixée au moyeu (1) radialement à l'intérieur d'une ceinture composite de renfort (4) dudit moyeu.

24. Tête de rotor selon l'une des revendications 19 à 23 caractérisée en ce que ledit organe (29) est monté sur le moyeu (1) de sorte que son axe (B) et le centre de la première rotule (43) de la bielle rigide (30) soient situés sensiblement dans un même plan radial passant par l'axe (A) du rotor et par la bissectrice des axes de changement de pas (X-X) de la pale correspondante et d'une pale immédiatement voisine, en position neutre de traînée des pales.

25. Tête de rotor selon l'une des revendications 10 à 18, caractérisée en ce que, pour chaque pale, le support de l'organe (89) de rappel élastique avec amortissement incorporé correspondant est constitué par la partie d'attache fourchue (74) d'une pale immédiatement voisine du rotor, de sorte que la bielle rigide correspondante (90) soit montée en tirant interpales, reliant les parties d'attache fourchue (74) de ces deux pales voisines.

26. Tête de rotor selon la revendication 25, caractérisée en ce que ledit organe (89) est logé et fixé par son armature interne (91) dans la pièce d'attache fourchue (74) de la pale voisine, de sorte que l'axe (B) de cet organe (89) coupe l'axe longitudinal et de changement de pas (X-X) de la pièce d'attache fourchue (74) de la pale voisine.

27. Tête de rotor selon la revendication 26, telle que rattachée à la revendication 14, caractérisée en ce que chaque organe (89) est retenu dans ladite portion centrale en manchon (75) de la partie d'attache fourchue correspondante (74), cette portion centrale en manchon (75) présentant, d'un côté de son axe longitudinal, une ouverture (111) latérale de passage de la connexion de la première rotule (103) de la bielle correspondante (90) au levier correspondant (94), incliné radialement vers l'extérieur par rapport à l'axe (B) de l'organe (89) et latéralement vers la pièce d'attache fourchue (74) voisine, à laquelle la bielle correspondante (90) est reliée en tirant interpales, tandis que du côté opposé de son axe longitudinal, ladite portion centrale en manchon (75) présente une autre ouverture latérale (110), entre les deux joues (109a, 109b), en saillie latérale vers l'extérieur, de la chape de retenue de la seconde rotule (104) de la bielle (90) reliée à l'organe (89) logé dans la partie d'attache fourchue (74) voisine de l'autre côté.

## Patentansprüche

1. Vorrichtung zur Schwenkdämpfung und elastischen Rückholung für ein Rotorblatt eines Drehflügelflugzeugs, an dem jedes Rotorblatt einen Fuß (13) aufweist, über den es an eine um die Achse (A) des Rotors in Drehung angetriebene Nabe (1, 61) angekoppelt ist und durch Gelenkmittel (5) an der Nabe (1, 61) gehalten wird, die Steigungs- und Schlagwinkelbewegungen des Blattes sowie abwechselnde Schwenkwinkelbewegungen des Blattes in der Drehebene der Rotorblätter zulassen, wobei die Vorrichtung (28, 88) vom Typ mit einem Drehdämpfungsorgan (28, 29) ist, das mit Mitteln ausgestattet ist, die die Dämpfung der Relativverschwenkung zweier koaxialer Beschläge (31, 91; 32, 92) des Organs ermöglichen, wobei der eine (32, 92) der Beschläge über wenigstens eine Stange (30, 90) mit dem Fuß des Blattes (13) oder mit einem Element (14) verbunden ist, das mit ihm in einem Stück ausgebildet ist, wobei der andere (31, 91) der Beschläge mit einem Träger (50a-50b und 74) fest verbunden ist, der nicht in einem Stück mit dem Fuß des Blattes (13) bezüglich seiner abwechselnden Schwenkwinkelbewegungen ausgebildet ist, so daß die Schwenkwinkelbewegungen des Blattes durch die Stange (30, 90) zu dem Beschlag übertragen werden, mit dem sie verbunden ist, wobei die Dämpfung der Relativbewegung der beiden Beschläge die Dämpfung der Schwenkwinkelbewegungen des Blattes sicherstellt, dadurch gekennzeichnet, daß das Dämpfungsorgan (29, 89) der Vorrichtung ein elastisches Rückholorgan ist, das über Scherung eines viskoelastischen Materials (33, 93) mit hoher Remanenz gegenüber Verformungen funktioniert und zwischen die beiden starren Beschläge (31, 91; 32, 92) gesetzt ist, wobei das viskoelastische Material die Form eines dünnen Kranzes (33, 93) aufweist, dessen Innen- und Außenwand an eine Außenfläche des inneren Beschlages (31, 91) bzw. an eine Innenfläche des äußeren Beschlages (32, 92) geklebt sind, wobei die Innen- und Außenflächen im wesentlichen koaxiale Rotationsflächen um die Achse (B) des Organs sind, wobei der äußere Beschlag (32, 92) einen Hebel (34, 93) aufweist, der von dem Organ (29, 89) im wesentlichen radial nach außen hervorragt und an den über einen ersten Kugelkopf (43, 103) die obengenannte Stange (30, 90) angelenkt ist, wobei die Stange (30, 90) auch mit einem zweiten Gelenkkugelkopf (44, 104) ausgestattet ist, der dazu bestimmt ist, sie mit dem Fuß des Blattes (13) bezüglich dessen Schwenkbewegungen fest zu verbinden,
während der innere Beschlag (31, 91) dazu bestimmt ist, fest mit einem Träger (50a, 50b, 74) verbunden zu werden, der durch die Nabe (1, 61) um die Achse (A) des Rotors in Drehung angetrieben wird, wobei der Träger (50a, 50b, 74) nicht mit dem Blatt bezüglich dessen Schwenkbewegungen, aber auch bezüglich der Steigungs- und Schlagbewegungen fest verbunden ist, so daß, da die Schwenk- und auch die Steigungs- und Schlagwinkelbewegungen des Blattes durch die Stange (30, 90) zu dem Hebel (34, 94) und dem äußeren Beschlag (32, 92) übertragen werden, die so bezüglich des inneren Beschlages um die Achse (B) des Organs (29, 89) in Drehung angetrieben werden, der Kranz (33, 93) aus viskoelastischem Material in Scherung in Umfangsrichtung vorgespannt wird und eine Drehdämpfung der Relativbewegungen der beiden Beschläge (31, 91; 32, 91) sicherstellt, indem er eine elastische Drehrückholung der beiden Beschläge in eine Ausgangsrelativposition durchführt, die einer neutralen Schwenkposition des Blattes entspricht.

2. Vorrichtung nach Anspruch 1, dadurch gekennzeichnet, daß der dünne Kranz (93) aus viskoelastischem Material ein schief abgeschnittener Zylinder mit kreisförmigem Querschnitt ist, und daß die entsprechenden, koaxialen Rotationsflächen der starren Beschläge (91, 92), an die die Innen- und die Außenwand des dünnen Kranzes aus viskoelastischem Material geklebt sind, Zylinder sind.

3. Vorrichtung nach Anspruch 1, dadurch gekennzeichnet, daß die im wesentlichen koaxialen Rotationsflächen der starren Beschläge (31, 32) und die entsprechende Innen- und die Außenwand des dünnen Kranzes aus viskoelastischem Material wenigstens teilweise konisch sind.

4. Vorrichtung nach Anspruch 3, dadurch gekennzeichnet, daß die Innen- und die Außenwand des dünnen Kranzes (33) aus viskoelastischem Material sowie die Außenfläche des inneren Beschlages (31) und die Innenfläche des äußeren Beschlages (32), an die die Wände des dünnen Kranzes (33) geklebt sind, jeweils eine im wesentlichen doppelkonische Form aufweisen, die in axialer Richtung zu ihrem zentralen Teil zusammenläuft.

5. Vorrichtung nach einem der Ansprüche 1 bis 4, dadurch gekennzeichnet, daß der dünne Kranz aus viskoelastischem Material (33), der über seine Innen- und Außenwand auf die entsprechenden, im wesentlichen koaxialen Drehflächen des starren inneren (31) und äußeren Beschlages (32) geklebt ist, zwischen den Beschlägen druckvorbelastet ist.

6. Vorrichtung nach Anspruch 5 wie nach Anspruch 4, dadurch gekennzeichnet, daß der dünne Kranz (33) aus viskoelastischem Material mit doppelkonischer Form aus zwei kegelstumpfförmigen Hälften (33a, 33b) gebildet ist, die im wesentlichen zueinander symmetrisch sind und über ihre kleine Grundfläche einander zugewandt sind, wobei der innere Beschlag (31) aus zwei unabhängigen Hälften (31a, 31b) gebildet ist, die im wesentlichen zueinander symmetrisch sind, und deren seitliche Außenfläche jeweils kegelstumpfförmig ist und eine der anderen Hälfte des inneren Beschlages zugewandte, kleine Grundfläche aufweist, wobei jede Hälfte des inneren Beschlages (31a, 31b) mit einer der Hälften (33a, 33b) des doppelkonischen Kranzes verklebt ist, wobei sie in der Ruhestellung von der anderen Hälfte des inneren Beschlages beabstandet ist, und wobei sie bei der Montage des Organs (29) gegen die andere Hälfte des inneren Beschlages gedrückt ist, um das viskoelastische Material der beiden kegelstumpfförmigen Hälften (33a,33b) des doppelkonischen Kranzes (33) druckvorzubelasten.

7. Vorrichtung nach einem der Ansprüche 1 bis 6, dadurch gekennzeichnet, daß der von dem Organ (29, 89) im wesentlichen radial an dessen äußerem Beschlag (32, 92) nach außen hervorragende Hebel an seinem radial äußeren Ende eine Gabel mit zwei Seitenteilen (35a-35b, 95a-95b) aufweist, zwischen denen der erste Kugelkopf (43, 103) der starren Stange (30, 90) befestigt ist.

8. Vorrichtung nach Anspruch 7, dadurch gekennzeichnet daß die beiden Beschläge (31, 91 - 32, 92) im wesentlichen die gleiche axiale Ausdehnung aufweisen, und daß die beiden Seitenteile (35a-35b, 95a-95b) der Gabel des Hebels (34, 94) im wesentlichen eben, im wesentlichen zueinander parallel sind und sich im wesentlichen senkrecht zu der Achse (B) des Organs (29, 89) und im wesentlichen symmetrisch zueinander bezüglich einer radialen Mittelebene erstrecken, senkrecht zu der Achse (B) des Organs (29, 89) in der Hälfte der axialen Ausdehnung, und in der das Zentrum des ersten Kugelkopfes (43, 103) der Stange (30, 90) liegt, die in der Gabel des Hebels (34, 94) um eine zu der Achse des Organs (29, 89) parallele Achse (47, 107) gehalten ist.

9. Vorrichtung nach einem der Ansprüche 1 bis 8, dadurch gekennzeichnet, daß die starre Stange (30) geradlinig und von verstellbarer Länge ist, wobei jedes ihrer Enden durch ein Ansatzstück (41, 42) mit abnehmbarem Kugelkopf (43, 44) gebildet ist, das axial bezüglich eines zentralen Körpers (40) der Stange verstellbar angebracht ist.

10. Rotorkopf für ein Drehflügelflugzeug des Typs, der aufweist:
- eine durch einen Rotorstiel (2, 62) um eine Achse (A) des Rotors in Drehung angetriebene Nabe (1, 61), und für jedes Rotorblatt
- einen gegabelten Befestigungsteil (14, 74), der mit dem Fuß (13) des Blattes bewegungsfest verbunden ist, sowie mit zwei radialen, inneren Schenkeln (18a-18b, 78a-78b), die voneinander in Richtung der Achse des Rotors beabstandet sind,
- Halte- und Gelenkmittel für das Blatt an der Nabe (1, 61), die wenigstens teilweise in einem Hohlraum (3, 63) der Nabe und zwischen den radialen Schenkeln des gegabelten Befestigungsteils (14, 74) aufgenommen sind und wenigstens einen laminierten, elastomeren Anschlag (5) aufweisen, der zwischen einem mit der Nabe (1, 61) fest verbundenen, radial äußeren Träger (6) und einem mit den beiden radialen Schenkeln des gegabelten Befestigungsteils (14, 74) fest verbundenen, radial inneren Träger (8) gehalten wird und abwechselnde Schwenkwinkelbewegungen des Blattes in der Rotationsebene der Rotorblätter zuläßt, sowie
- ein Organ (29, 89) zur elastischen Rückholung mit integrierter Schwenkdämpfung des Blattes, das über Scherung eines viskoelastischen Materials mit hoher Remanenz gegenüber Verformungen funktioniert und zwischen zwei starre Beschläge (31-32, 91-92) gesetzt ist, die gegeneinander beweglich sind, und so, daß ein erster Beschlag (32, 92) des Organs (29, 89) an den Fuß (13) des Blattes gekoppelt ist, während der zweite Beschlag (31, 91) des Organs an einen Träger (50a-50b, 74) des Organs gekoppelt ist, der durch die Nabe (1, 61) in Drehung um die Achse (A) des Rotors angetrieben und nicht mit dem Fuß (13) des Blattes bewegungsfest verbunden ist, wobei der Kopf dadurch gekennzeichnet ist, daß er eine Vorrichtung zur Schwenkdämpfung und elastischen Rückholung (28, 88) nach einem der vorhergehenden Ansprüche 1 bis 9 aufweist, deren starre Stange (30, 90) über ihren zweiten Kugelkopf (44, 104) an den gegabelten Befestigungsteil (14, 74) angelenkt ist, und deren zweiter Beschlag der innere Beschlag (31, 91) ist der so an dem Organträger befestigt ist, daß der mit dem ersten Beschlag, der der äußere Beschlag (32, 92) des Organs (29, 89) ist, fest verbundene Hebel (34, 94) gegen die Richtung geneigt ist, die durch die Achse (B) des Organs und durch das Gelenkzentrum des zweiten Kugelkopfes (44, 104) verläuft, damit jede Schwenkwinkelbewegung des Blattes durch die Stange (30, 90) zu dem Hebel (34, 94) und dem äußeren Beschlag (32, 92) des Organs übertragen wird, die bezüglich des inneren Beschlages (31, 91) um die Achse (B) des Organs drehverschoben werden, so daß der dünne Kranz (33, 93) aus viskoelastischem Material in Umfangsrichtung um seine Achse (B) in Scherung vorgespannt wird, und um eine Drehdämpfung der Relativdrehbewegungen der beiden Beschläge sicherzustellen, indem eine elastische Drehrückholung der beiden Beschläge in eine Ausgangsrelativposition durchgeführt wird, die einer neutralen Schwenkposition des Blattes entspricht.

11. Rotorkopf nach Anspruch 10, dadurch gekennzeichnet, daß der innere Beschlag (31, 91) des Organs (29, 89) so an dem Träger (50a, 50b, 74) des Organs befestigt ist, daß die Achse (B) des Organs im wesentlichen parallel zu der Achse (A) des Rotors liegt.

12. Rotorkopf nach Anspruch 11, dadurch gekennzeichnet, daß der erste (43, 103) und der zweite Kugelkopf (44, 104) jeder Stange (30, 90) an dem Hebel (34, 93) bzw. an dem gegabelten Befestigungsstück (14, 74) durch parallel zu der Achse (B) des entsprechenden Organs (29, 89) liegende Achsen gehalten sind, wobei das Zentrum des ersten Kugelkopfes (43, 103) bevorzugt bezüglich der Achse (A) des Rotors radial außerhalb der Achse (B) des Organs liegt.

13. Rotorkopf nach einem der Ansprüche 10 bis 12, dadurch gekennzeichnet, daß der zweite Kugelkopf (44, 104) zwischen den beiden Seitenteilen (49a, 49b - 109a, 109b) einer Gabel gehalten wird, die seitlich an dem gegabelten Befestigungsstück (14, 74) hervorragt, an einer Seite der Längsachse (X-X) und der Steigungsänderungsachse des gegabelten Befestigungsstücks und des entsprechenden Blattes, bevorzugt so, daß das Zentrum des zweiten Kugelkopfes (44, 104) in der durch die Längsachse verlaufenden Schwenkebene des Blattes liegt.

14. Rotorkopf nach Anspruch 13, dadurch gekennzeichnet, daß der gegabelte Befestigungsteil (14, 74) ein in seinem radialen, zentralen Abschnitt im wesentlichen als Hülse (15, 75) zwischen seinen radial inneren Schenkeln (18a, 18b - 78a, 78b) geformt ist, die eine radial innere Verbindungsgabel mit den Mitteln zum Halten und Anlenken des Blattes an der Nabe (1, 61) bilden, sowie eine radial äußere Verbindungsgabel (16a, 16b - 76a, 76b) zur Verbindung mit dem Fuß des Blattes (13), und der zentrale Hülsenabschnitt an der zu dem entsprechenden Organ (29, 89) zur elastischen Rückholung mit integrierter Dämpfung bezüglich seiner Längsachse (X-X) gedrehten Seite aus einem einzigen Stück ist, mit seitlich von der Gabel zum Halten des zweiten Kugelkopfes (44, 104) hervorragenden Seitenteilen (49a, 49b - 109a, 109b) und eventuell an der entgegengesetzten Seite mit einem Steigungsänderungshebel (23, 83), der seitlich hervorragend und zu der Nabe (1, 61) geneigt ist.

15. Rotorkopf nach einem der Ansprüche 10 bis 14, dadurch gekennzeichnet, daß die Mittel zum Halten und Anlenken jedes Blattes an der Nabe (1, 61) durch einen kugelförmigen, laminierten Anschlag (5) gebildet sind, dessen Zentrum sich im Schnittpunkt der Steigungsänderungs-, Schlag- und Schwenkachsen des entsprechenden Blattes befindet.

16. Rotorkopf nach Anspruch 15, dadurch gekennzeichnet, daß die Nabe (1, 61) eine einzige von Zellen (3, 63) durchbrochene, radiale Platte (1c) aufweist, deren Anzahl gleich der Anzahl der Rotorblätter ist und die jeweils den Hohlraum zur teilweisen Aufnahme des entsprechenden kugelförmigen, laminierten Anschlags (5) bilden, dessen radial äußerer Träger (6) an dem äußeren Rand der Zelle (3, 63) befestigt ist, und dessen radial innerer Träger (8) die Zelle (3, 63) frei durchquert und als Strebe zwischen den radial inneren Schenkeln (18a, 18b - 78a, 78b) des entsprechenden gegabelten Befestigungsstücks (14, 74) beiderseits der radialen Platte (1c) befestigt ist.

17. Rotorkopf nach Anspruch 15, dadurch gekennzeichnet, daß die Nabe zwei in Richtung der Rotorachse voneinander beabstandete, radiale Platten aufweist, zwischen denen der laminierte, kugelförmige Anschlag (5) zum Anlenken jedes Blattes an der Nabe aufgenommen ist, wobei der entsprechende, radial innere Träger (8) als Strebe zwischen den radial inneren Schenkeln (18a, 18b - 78a, 78b) des entsprechenden gegabelten Befestigungsteils (14, 74) angebracht ist, die Ausnehmungen aufweisen und zwischen die radialen Platten der Naben eingesetzt sind, und wobei der radial äußere Träger des kugelförmigen, laminierten Anschlags ebenfalls als Strebe zwischen den radialen Rändern der Platten angebracht ist, und dabei die Ausnehmungen der radialen Schenkel des gegabelten Befestigungsteils durchquert.

18. Rotorkopf nach Anspruch 15, dadurch gekennzeichnet, daß er einen integrierten, rohrförmigen Nabenstiel aufweist, der für jedes Blatt von wenigstens einer Durchgangsöffnung für einen radial inneren Schenkel des entsprechenden gegabelten Befestigungsteils durchbrochen ist, wobei der entsprechende kugelförmige, laminierte Anschlag wenigstens zum Teil im Inneren des integrierten, rohrförmigen Nabenstiels aufgenommen ist, wobei sein radial äußerer Träger an einem Umfangsteil des Nabenstiels und sein radial innerer Träger als Strebe zwischen den radial inneren Schenkeln des entsprechenden gegabelten Befestigungsteils befestigt ist.

19. Rotorkopf nach einem der Ansprüche 10 bis 18, dadurch gekennzeichnet, daß der Träger (50a, 50b) des Organs (29) zur elastischen Rückholung mit integrierter Dämpfung für jedes Blatt den inneren Beschlag (31) des Organs direkt fest mit der Nabe (1) verbindet.

20. Rotorkopf nach Anspruch 19, wie nach einem der Ansprüche 15 bis 18, dadurch gekennzeichnet, daß der erste Kugelkopf (43) der Stange (30) für jedes Blatt an dem Hebel (34) des ersten Beschlages (31) des entsprechenden Organs (29) gehalten wird, so daß das Zentrum des ersten Kugelkopfes (43) im wesentlichen auf der Schlagachse des Blattes liegt.

21. Rotorkopf nach einem der Ansprüche 19 und 20, dadurch gekennzeichnet, daß das Organ (29) jedes Blattes am Umfang der Nabe (1) angebracht ist.

22. Rotorkopf nach Anspruch 21, dadurch gekennzeichnet, daß das Organ (29) freitragend und radial von der Nabe (1) hervorragend angebracht ist

23. Rotorkopf nach einem der Ansprüche 21 und 22, dadurch gekennzeichnet, daß der innere Beschlag (31) des Organs (29) an der Nabe (1) durch wenigstens einen im wesentlichen radialen Trägerflansch (50a, 50b) fest angebracht ist, der an der Nabe (1) radial im Inneren eines Verbundverstärkungsreifs (4) der Nabe befestigt ist.

24. Rotorkopf nach einem der Ansprüche 19 bis 23, dadurch gekennzeichnet, daß das Organ (29) so an der Nabe (1) angebracht ist, daß seine Achse (B) und das Zentrum des ersten Kugelkopfes (43) der starren Stange (30) im wesentlichen in einer gleichen radialen Ebene liegen, die durch die Achse (A) des Rotors und die Winkelhalbierende der Steigungsänderungsachsen (X-X) des entsprechenden Blattes und eines unmittelbar benachbarten Blattes in neutraler Schwenkposition der Blätter verläuft.

25. Rotorkopf nach einem der Ansprüche 10 bis 18, dadurch gekennzeichnet, daß für jedes Blatt der Träger für das Organ (89) zur elastischen Rückholung mit integrierter Dämpfung durch den gegabelten Befestigungsteil (74) eines dem Rotor unmittelbar benachbarten Blattes gebildet ist, so daß die entsprechende starre Stange (90) in dem freien Raum zwischen den Blättern angebracht ist, wobei sie die gegabelten Befestigungsteile (74) der beiden benachbarten Blätter verbindet.

26. Rotorkopf nach Anspruch 25, dadurch gekennzeichnet, daß das Organ (89) in dem gegabelten Befestigungsstück (74) des benachbarten Blattes aufgenommen und durch seinen inneren Beschlag (91) befestigt ist, so daß die Achse (B) des Organs (89) die Längs- und Steigungsänderungsachse (X-X) des gegabelten Befestigungsstücks (74) des benachbarten Blattes schneidet.

27. Rotorkopf nach Anspruch 26 wie nach Anspruch 14, dadurch gekennzeichnet, daß jedes Organ (89) in dem zentralen hülsenförmigen Abschnitt (75) des entsprechenden gegabelten Befestigungsteils (74) gehalten wird, wobei der zentrale hülsenförmige Abschnitt (75) an einer Seite seiner Längsachse eine seitliche Durchgangsöffnung (111) für die Verbindung des ersten Kugelkopfes (103) der entsprechenden Stange (90) mit dem entsprechenden Hebel (94) aufweist, der bezüglich der Achse (B) des Organs (89) radial nach außen und seitlich zu dem benachbarten gegabelten Befestigungsstück (74) geneigt ist, mit dem die entsprechende Stange (90) im freien Raum zwischen den Blättern verbunden ist, während der hülsenförmige zentrale Abschnitt (75) an der entgegengesetzten Seite seiner Längsachse,
zwischen den beiden seitlich nach außen hervorragenden Seitenteilen (109a, 109b) eine weitere seitliche Öffnung (110) für die Gabel zum Halten des zweiten Kugelkopfes (104) der Stange (90) aufweist, die mit dem Organ (89) verbunden ist, das in dem benachbarten gegabelten Befestigungsteil (74) der anderen Seite aufgenommen ist.

## Claims

1. A drag elastic-return and damping device, for a rotorcraft rotor blade , on which rotorcraft each blade of the rotor has a foot (13) by way of which it is coupled to a hub ( 1 , 61) , driven in rotation about the axis (A) of the rotor , and retained on said hub ( 1 , 61 ) by at least one hinge means (5) permitting angular pitch and flapping movements of the blade , as well as alternate drag angular movements of the blade in the plane of rotation of the blades of the rotor , said device (28, 88) being of the type comprising a rotary damping member ( 29, 89) provided with means permitting the damping of the relative pivoting of two armatures (31, 91; 32, 92) arranged coaxially with said member, one (32, 92) of these armatures being connected by at least a connecting rod ( 30, 90) to the foot (13) of the blade or to a member (14) integral with it , the other one (31, 91) of these armatures being integrally connected to a support (50a-50b and 74) non integral with the foot (13) of the blade in alternate angular drag movements, such that drag angular movements of the blade are transmitted by said connecting rod (30, 90) to the armature to which it is connected , the damping of the relative movement of the two armatures ensuring the damping of the drag angular movements of the blade wherein the damping member (29, 89) of said device is an elastic return member functioning by shearing of a viscoelastic material (33, 93) with high remanence to distortions , placed in between two rigid armatures ( 31, 91-32, 92) , wherein the viscoelastic material is in the form of a thin collar (33,93) whose inner and outer walls are adhesively bonded to an outer surface of an inner armature ( 31, 91) and to an inner surface of an outer armature ( 32, 92), respectively, and such that said inner and outer surfaces are surfaces substantially of revolution and coaxial about the axis (B) of said member ( 29, 89) , and wherein the outer armature ( 32, 92) has a lever (34 , 94) projecting substantially radially outward from the member ( 29, 89) and on which is articulated, by way of a first rotational joint ( 43, 103) , the above rigid connecting rod of fixed length ( 30, 90 ) which is likewise equipped with a second rotational joint ( 44, 104) intended to make the connecting rod (30, 90) integral in drag movement with the blade foot ( 13) , whereas the inner armature (31, 91) is intended to be integrally connected to a support (50a-50b, 74) driven by the hub ( 1, 61) in rotation about the axis (A) of the rotor , which support ( 50a, 50b, 74) is not integral in drag movements with said blade but also in pitch and flapping movements , such that the drag angular movements , and also the pitch and flapping movements of the blade being transmitted by the connecting rod (30, 90) to the lever ( 34, 94) and to the outer armature (32, 92) , which are thus driven in rotation relative to the inner armature about the axis (B) of said member ( 29, 89), the collar of viscoelastic material (33,93) is stressed in shear in the circumferential direction and ensures damping in rotation of the relative movements of the two armatures (31-91, 32-92) by effecting an elastic return in rotation of these two armatures into a relative initial position corresponding to a neutral position of the blade in drag .

2. The device as claimed in claim 1 , wherein the thin collar of viscoelastic material (93) is a truncated cylinder with a circular cross-section, and wherein the corresponding coaxial surfaces of revolution of the rigid armatures ( 91, 92) to which the inner and outer walls of the thin collar of viscoelastic material are adhesively bonded, are cylinders .

3. The device as claimed in claim 1 , wherein the coaxial surfaces substantially of revolution of the rigid armatures ( 31 , 32 ) and the corresponding inner and outer walls of the thin collar of viscoelastic material (33) are at least partially conical.

4. The device as claimed in claim 3 , wherein the inner and outer walls of the thin collar (33) of viscoelastic material, and the outer surface of the inner armature (31) and the inner surface of the outer armature (32) , to which said walls of the thin collar (33) are adhesively bonded , each have a substantially symmetrical biconical form , converging towards its central part , in the axial direction .

5. The device as claimed in one of claims 1 to 4 , wherein the thin collar of viscoelastic material (33) adhesively bonded by way of its inner and outer walls to the corresponding surfaces, substantially coaxial and of revolution, of the outer ( 32 ) and inner (31) rigid armatures, is prestressed in compression between said armatures .

6. The device as claimed in claim 5 , dependent upon claim 4, wherein said thin collar (33) of viscoelastic material , of biconical shape , consists of two frustoconical halves (33a, 33b) which are substantially symmetrical to one another and turned toward one another by their small base, the inner armature (31) consisting of two independent halves (31a, 31b) which are substantially symmetrical to one another and each of whose outer lateral face is frustoconical and has its small base turned toward that of the other inner armature half , each inner armature half (31a, 31b) being adhesively bonded to one of the halves (33a, 33b), respectively , of the biconical collar (33) , being axially spaced apart when at rest from the other inner armature half and being axially compressed into abutment with the other inner armature half when said member (29) is mounted, so as to prestress the viscoelastic material of the two frustoconical halves (33a, 33b) of this biconical collar (33) in compression.

7. The device as claimed in claims 1 to 6 , wherein said lever (34, 94) projecting substantially radially toward the outside of said member (29, 89) on the outer armature (32, 92) of the latter comprises at its radial outer end a yoke with two cheeks (35a - 35b, 95a - 95 b) between which is mounted the first rotational joint (43, 103) of the rigid connecting rod (30, 90).

8. The device as claimed in claim 7 , wherein the two armatures ( 31, 91 - 32 , 92 ) have substantially the same axial dimension, and wherein the two cheeks ( 35a - 35b, 95a - 95b) of the yoke of the lever ( 34,94 ) are substantially plane , substantially parallel to one another and extend substantially perpendicular to the axis (B) of the member (29, 89) , and substantially symmetrically to one another relative to a radial mid plane perpendicular to the axis ( B ) of the member (29, 89) at half said axial dimension, and in which is situated the center of the first rotational joint (43, 103) of the connecting rod (30, 90) which is retained in the yoke of the lever (34 , 94) by a pin (47, 107) parallel to the axis of the member (29, 89).

9. The device as claimed in one of claims 1 to 8 , wherein the rigid connecting rod (30) is rectilinear and of adjustable length , each of its ends consisting of a joining piece (41, 42) with a removable rotational joint (43, 44) and which is mounted so as to be axially adjustable relative to a central connecting-rod body (40).

10. A rotorcraft rotor head , of the type comprising :
- a hub ( 1, 61) driven in rotation by a rotor mast (2, 62) about an axis (A) of the rotor , and , for each blade of the rotor
- a forked attachment part ( 14, 74) integral in movement with the foot (13) of the blade and having two inner radial legs (18a- 18b, 78a - 78b) spaced apart from one another in the direction of the axis of the rotor ,
- means for retaining and articulating the blade on the hub ( 1, 6) which are at least partially housed in a cavity ( 3, 63) of the hub and between the radial legs of the forked attachment part ( 14, 74) and which comprise at least one elastomeric laminated block (5) retained between an outer radial support (6) integral with the hub ( 1, 61) and an inner radial support (8) integral with the two radial legs of the forked attachment part (14, 74) and permitting alternate drag movements of the blade in the plane of rotation of the blades of the rotor , and
- a member ( 29, 89) for the elastic return with incorporated damping of the blade in drag , functioning by the shearing of a viscoelastic material with high remanence to distortions placed in between two rigid armatures ( 31 - 32, 91 - 92) which can move relative to each other , and such that a first armature (32, 92) of the member ( 29, 89) is coupled to the foot ( 13) of the blade , whereas the second armature ( 31, 91) of the member is coupled to a support (50a - 50b , 74) for said member , driven by the hub ( 1, 61) in rotation about the axis (A) of the rotor and not integral in movement with the foot (13) of the blade , wherein said head comprises a drag damping and elastic-return device (28,,88) as claimed in one of the preceding claims 1 to 9 , the rigid connecting rod (30, 90) of which is articulated by way of its second rotational joint (44, 104) on said forked attachment part (14, 74), and the second armature of which is the inner armature (31, 91) fixed to said member support such that the lever (34, 94) integral with the first armature , which is the first armature, which is the outer armature ( 32, 92) of said member (29, 89), is inclined to the direction passing through the axis (B) of said member and through the center of articulation of said second rotational joint ( 44, 104) , such that any drag angular movement of the blade is transmitted by the connecting rod (30, 90) to the lever ( 34 , 94) and to the outer armature ( 32, 92) of the member which are displaced in rotation relative to the inner armature (31, 91) about the axis (B) of the member , so as to stress the thin collar (33, 93) of viscoelastic material in shear in the circumferential direction about its axis (B) , and to ensure a damping in rotation of the relative rotational movements of the two armatures by effecting an elastic return in rotation of these two armatures to an initial relative position corresponding to a neutral position of the blade in drag.

11. The rotor head as claimed in claim 10, wherein the inner armature ( 31, 91) of said member (29, 89) is fixed to the support (50a, 50b, 74) of said member such that the axis (B) of said member is substantially parallel to the axis (A) of the rotor.

12. The rotor head as claimed in claim 11, wherein the first ( 43, 103) and second (44, 104) rotational joints of each connecting rod (30, 90) are retained respectively on the lever (34, 94) and on the forked attachment part ( 14, 74) by pins parallel to the axis (B) of the corresponding member (29, 89), the center of the first rotational joint (43, 103) being preferably radially outside the axis (B) of said member, relative to the axis (A) of the rotor .

13. The rotor head as claimed in claims 10 to 12, wherein the second rotational joint (44, 104) is retained between the two cheeks (49a, 49b - 109a, 109b) of a yoke projecting laterally from the forked attachment pièce ( 14, 74) on one side of the longitudinal and change-of-pitch axis (X-X) of this forked attachment pièce and of the corresponding blade, preferably such that the center of this second rotational joint ( 44, 104) is situated substantially in the drag plane of the blade passing through said longitudinal axis .

14. The rotor head as claimed in claim 13, wherein the forked attachment part (14, 74) is a pièce substantially shaped into a sleeve ( 15, 75) in its central radial portion, between its inner radial legs (18a, 18b- 78a, 78b) , forming a radial inner yoke for linking to the means for retaining and articulating the blade with the hub ( 1, 61) , and an outer radial yoke (16a, 16b - 76a, 76b) for linking to the blade foot (13), and said central sleeve portion is a single piece , having its side turned towards the corresponding member (29, 89) for elastic return with incorporated damping relative to its longitudinal axis (X-X), with the cheeks ( 49a, 49b - 109a, 109b) projecting laterally from the yoke for retaining the second rotational joint (44, 104) , and , optionally, on the opposite side, with a change-of-pitch lever (23,83) which is inclined so as to project laterally and towards the hub ( 1 , 61 ) .

15. The rotor head as claimed in one of claims 10 to 14, wherein the means for retaining and articulating each blade on the hub ( 1 , 61) consist of a spherical laminated block (5) whose center is situated at the intersection of the change-of-pitch , flapping and drag axes of the corresponding blade .

16. The rotor head as claimed in claim 15, wherein the hub ( 1 , 61 ) comprises a single radial disk (1c) pierced with the same number of hollows (3, 63) as the number of blades of the rotor, and each forming the cavity for partially housing the corresponding laminated spherical block (5) whose outer radial support (6) is fixed on the outer edge of the hollow ( 3 , 63 ) and whose inner radial support (8) passes freely through the hollow (3, 63) and is fixed as a brace between the inner radical legs (18a, 18b - 78a, 78b) of the corresponding forked attachment pièce ( 14, 74), on either side of the radial disk (1c).

17. The rotor head as claimed in claim 15, wherein the hub comprises two radial disks spaced apart from one another in the direction of the axis of the rotor and between which is housed the laminated spherical block (5) for articulating each blade on the hub , the corresponding inner radial legs ( 18a, 18b - 78a, 78b) of the corresponding forked attachment part ( 14 , 74) , which radial legs have recesses and are engaged between the radial disks of the hub , and the outer radial support of the spherical laminated block likewise being mounted as a brace between the radial edges of the disks , passing through the recesses of the radial legs of the forked attachment part .

18. The rotor head as claimed in claim 15 , wherein it comprises an integral tubular mast hub pierced , for each blade , with at least one opening for the passage of an inner radial leg of the corresponding formed attachment part , the corresponding spherical laminated block being housed at least partially inside the integral tubular mast hub with its outer radial support fixed on a peripheral part of the mast hub and its inner radial support fixed as a brace between the inner radial legs of the corresponding forked attachment part .

19. The rotor head as claimed in one of claims 10 to 18, wherein , for each blade , the support (50a, 50b) for the member (29) for elastic return with incorporated damping integrally connects the inner armature (31) of this member directly to the hub (1).

20. The rotor head as claimed in claim 19, as dependent upon one of claims 15 to 18, wherein, for each blade , the first rotational joint (43) of the connecting rod (30) is retained on the lever (34) of the first armature (31) of the corresponding member (29) such that the center of this first rotational joint (43) is substantially situated on the flapping axis of the blade .

21. The rotor head as claimed in either of claims 19 and 20 , wherein the said member ( 29) of each blade is mounted at the periphery of the hub (1).

22. The rotor head as claimed in claim 21, wherein said member (29) is mounted in a cantilever mode, projecting radially towards the outside of the hub (1).

23. The rotor head as claimed in either of claims 21 and 22 , wherein the inner armature (31) of said member (29) is integrally fastened to the hub (1) by at least one support flange ( 50a, 50b) substantially radial and fixed to the hub (1) radially inside a composite reinforcing band (4) of said hub.

24. The rotor head as claimed in one of claims 19 to 23, wherein said member (29) is mounted on the hub (1) such that its axis (B) and the center of the first rotational joint (43) of the rigid connecting rod (30) are situated substantially in a same radial plane passing through the axis (A) of the rotor and through the bisector of the change-of-pitch axes (X-X) of the corresponding blade and of an immediately adjacent blade , in the neutral drag position of the blades .

25. The rotor head as claimed in one of claims 10 to 18 , wherein, for each blade , the support for the corresponding member ( 89) for elastic return with incorporated damping consists of the forked attachment part (74) of an immediately adjacent blade of the rotor such that the corresponding rigid connecting rod (90) is mounted as an inter-blade tie connecting the forked attachment parts (74) of these two adjacent blades .

26. The rotor head as claimed in claim 25, wherein said member ( 89 ) is housed and fixed by its inner armature (91) in the forked attachment pièce (74) of the adjacent blade such that the axis (B) of this member (89) intersects the longitudinal and change-of-pitch axis (X-X) of the forked attachment pièce (74) of the adjacent blade .

27. The rotor head as claimed in claim 26, as dependent upon claim 14, wherein each member ( 89 ) is retained in said central sleeve portion (75) of the corresponding forked attachment part (74), this central sleeve portion (75) having , on one side of its longitudinal axis , a lateral passage opening (111) for the connection of the first rotational joint (103) of the corresponding connecting rod (90) to the corresponding lever (94), inclined radially towards the outside relative to the axis (B) of the member (89) and laterally towards the adjacent forked attachment pièce (74) to which the corresponding connecting rod (90) is connected as an inter-blade tie, whereas on the opposite side of its longitudinal axis said central sleeve portion (75) has another lateral opening (110) between the two cheeks ( 109a, 109b) projecting laterally outward from the yoke for retaining the second rotational joint (104) of the connecting rod (90) connected to the member (89) housed in the adjacent forked attachment part (74) on the other side.
